# EUROPEAN PATENT APPLICATION

(11) **EP 4 676 003 A1**
(43) Date of publication of application: **07.01.2026**
(21) Application number: 24784199.2
(22) Date of filing: 29.03.2024
(51) Int. Cl.: H04L 65/1066, H04W 4/02, H04W 48/08, H04W 48/16

(54) **COMMUNICATION METHOD AND APPARATUS**

(30) Priority: 05.04.2023 CN 202310383095
(71) Applicant: Huawei Technologies Co., Ltd., Shenzhen, Guangdong 518129 (CN)
(72) Inventor: GU, Zhuojia, Shenzhen, Guangdong 518129 (CN); WEI, Xinpeng, Shenzhen, Guangdong 518129 (CN); ZONG, Zaifeng, Shenzhen, Guangdong 518129 (CN); WANG, Yan, Shenzhen, Guangdong 518129 (CN)
(74) Representative: Gill Jennings & Every LLP
(86) International application number: PCT/CN2024/085033
(87) International publication number: WO 2024/208115

(57) **Abstract**

This application provides a communication method and apparatus, and relates to the field of communication technologies. The method includes: determining data network access identifiers respectively corresponding to a plurality of session management network elements, and determining a common data network access identifier of the plurality of session management network elements from the plurality of data network access identifiers, where the common data network access identifier indicates a common data network of a plurality of terminal devices, so that the plurality of terminal devices can access the same data network. Because the data network access identifiers supported by the session management network elements respectively corresponding to the plurality of terminal devices are considered when the common data network access identifier is determined, the data network that better meets requirements of the plurality of terminal devices can be determined.

## Description

### CROSS-REFERENCE TO RELATED APPLICATIONS

This application claims priority to Chinese Patent Application No. 202310383095.9, filed with the China National Intellectual Property Administration on April 5, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

In a scenario in which a plurality of terminal devices interact with each other (for example, a multi-player game), a common data network access identifier (data network access identifier, DNAI) needs to be selected for the plurality of terminal devices, and the DNAI indicates (or corresponds to) an edge part of a data network (local part of DN). In this way, the edge part of the data network can provide services for the plurality of terminal devices.

Currently, a manner of determining the DNAI for the plurality of terminal devices is as follows: A session management network element (session management function, SMF) corresponding to one of the plurality of terminal devices selects a common DNAI based on a location of the terminal device. The SMF stores the common DNAI in a unified data repository (unified data repository, UDR). SMFs corresponding to other terminal devices in the plurality of terminal devices may obtain the common DNAI from the UDR, to determine the same DNAI for the plurality of terminal devices. However, a DN corresponding to the common DNAI determined in this manner may not necessarily meet requirements of the plurality of terminal devices. For example, some of the plurality of terminal devices may not be able to access the DN corresponding to the common DNAI.

### SUMMARY

Embodiments of this application provide a communication method and apparatus, to determine a DNAI that better meets a requirement.

According to a first aspect, an embodiment of this application provides a communication method. The method may be performed by a first session management network element, or may be performed by an apparatus (for example, a chip) having a function of the first session management network element. The first session management network element is, for example, a session management function (session management function, SMF). The method includes: sending, to a unified data repository network element, a first DNAI corresponding to a first session management network element; receiving a plurality of DNAIs from the unified data repository network element, where the plurality of DNAIs are determined by the unified data repository network element based on a plurality of DNAIs from a plurality of session management network elements, the plurality of session management network elements include the first session management network element, and the plurality of DNAIs include the first DNAI; and determining, from the plurality of DNAIs, a common DNAI corresponding to the plurality of session management network elements.

In this embodiment of this application, when the common DNAI of a plurality of terminal devices is determined, DNAIs corresponding to a plurality of session management network elements corresponding to the plurality of terminal devices are considered, so that the determined DNAI better meets requirements of the plurality of session management network elements, and also better meets requirements of the plurality of terminal devices.

In a possible design, the method further includes: sending the common DNAI to the unified data repository network element. The common DNAI is used by the unified data repository network element to send the common DNAI to a session management network element other than the first session management network element in the plurality of session management network elements.

In this way, the unified data repository network element can store the common DNAI of the plurality of session management network elements, and may further send the common DNAI to the session management network element other than the first session management network element in the plurality of session management network elements.

In a possible design, the common DNAI is one data network access identifier corresponding to the plurality of session management network elements in the plurality of data network access identifiers.

In this way, the plurality of session management network elements can definitely access an edge part of a data network corresponding to the common DNAI, so that the edge part of the data network can smoothly serve the plurality of terminal devices. In addition, the common DNAI is the DNAI corresponding to the plurality of session management network elements in the plurality of DNAIs, which indicates, to some extent, that the common DNAI is close to the plurality of terminal devices. This helps the edge part of the data network corresponding to the common DNAI provide better services for the plurality of terminal devices.

In a possible design, each of the plurality of DNAIs is associated with an identifier of a session management network element corresponding to the DNAI, and/or an identifier of a terminal device.

In this way, the terminal device or the session management network element corresponding to each DNAI may be sensed, to facilitate subsequent determining of the common DNAI.

According to a second aspect, an embodiment of this application provides a communication method. The method may be performed by a policy control network element, or may be performed by an apparatus (for example, a chip) having a function of the policy control network element. The policy control network element is, for example, a policy control function (policy control function, PCF). The method includes: receiving a first DNAI from a first session management network element, where the first DNAI corresponds to the first session management network element; sending the first DNAI to a unified data repository network element; receiving a plurality of DNAIs from the unified data repository network element, where the plurality of DNAIs are determined by the unified data repository network element based on a plurality of DNAIs from a plurality of session management network elements, the plurality of session management network elements include the first session management network element, and the plurality of DNAIs include the first DNAI; and sending the plurality of DNAIs to the first session management network element, where the plurality of DNAIs are used by the first session management network element to determine a common DNAI of the plurality of session management network elements.

In a possible design, the method further includes: receiving the determined common DNAI from the first session management network element; and sending the common DNAI to the unified data repository network element, where the common DNAI is used by the unified data repository network element to send the common DNAI to a session management network element other than the first session management network element in the plurality of session management network elements.

In a possible design, the common data network identifier is one DNAI corresponding to the plurality of session management network elements in the plurality of DNAIs.

In a possible design, each of the plurality of DNAIs is associated with an identifier of a session management network element corresponding to the DNAI, and/or an identifier of a terminal device.

According to a third aspect, an embodiment of this application provides a communication method. The method may be performed by a unified data repository network element, or may be performed by an apparatus (for example, a chip) having a unified data repository function. The unified data repository network element is, for example, a unified data repository (unified data repository, UDR) function. The method includes: receiving a plurality of DNAIs from a plurality of session management network elements, where the plurality of session management network elements include a first session management network element; and sending the plurality of DNAIs to the first session management network element, where the plurality of DNAIs include a first DNAI corresponding to the first session management network element, and the plurality of DNAIs are used by the first session management network element to determine a common DNAI of the plurality of session management network elements.

In a possible design, the method further includes: receiving the determined common data network access identifier from the first session management network element; and sending the common data network access identifier to a session management network element other than the first session management network element in the plurality of session management network elements.

In a possible design, the common DNAI is one DNAI corresponding to the plurality of session management network elements in the plurality of DNAIs.

In a possible design, each of the plurality of data network access identifiers is associated with an identifier of a session management network element corresponding to the data network access identifier, and/or an identifier of a terminal device.

According to a fourth aspect, an embodiment of this application provides a communication method. The method may be performed by a first session management network element, or may be performed by an apparatus (for example, a chip) having a function of the first session management network element. The first session management network element is, for example, a first SMF. For ease of description, the following provides descriptions by using an example in which the method is performed by the first session management network element. The method includes: obtaining location information of a first terminal device, where the first terminal device is a terminal device managed by the first session management network element; receiving location information of at least one second terminal device from at least one second session management network element, where different second session management network elements in the at least one second session management network element manage different terminal devices in the at least one second terminal device; and sending location information of a plurality of terminal devices to a first edge application server discovery network element, where the plurality of terminal devices include the first terminal device and the at least one second terminal device, and the location information of the plurality of terminal devices is used by the first edge application server discovery network element to determine a common edge application server of the plurality of terminal devices.

In this embodiment of this application, the first session management network element may obtain the location information of the plurality of terminal devices, and determine the common edge application server of the plurality of terminal devices based on the location information of the plurality of terminal devices, instead of determining the common edge application server based on location information of a terminal device. In this way, the determined common edge application server better meets requirements of the plurality of terminal devices. In addition, the common edge application server that is close to the plurality of terminal devices may be determined based on the location information of the plurality of terminal devices. This helps reduce a delay of providing services by the common edge application server for the plurality of terminal devices.

In a possible design, the method further includes: separately sending the location information of the plurality of terminal devices to the at least one second session management network element; or separately sending the location information of the first terminal device to the at least one second session management network element.

In the foregoing design, the first session management network element may be used as a primary session management network element that collects the location information of the plurality of terminal devices, or the first session management network element and the at least one second session management network element may send location information of respective terminal devices to each other. This provides two manners of sharing location information of terminal devices between session management network elements.

In a possible design, the method further includes: receiving first indication information from a network exposure network element or a policy control network element, where the first indication information indicates the first session management network element to send the location information of the plurality of terminal devices to the at least one second session management network element. Indicating the first session management network element to send the location information of the plurality of terminal devices to the at least one second session management network element may also be described as indicating the first session management network element to serve as the primary session management network element.

In the foregoing design, the network exposure network element or the policy control network element may indicate the first session management network element to serve as the primary session management network element, to ensure that the first session management network element determines (or collects) the location information of the plurality of terminal devices in time.

In a possible design, the method further includes: separately sending second indication information to the at least one second session management network element, where the second indication information indicates that the first session management network element subscribes to the location information of the second terminal device managed by the at least one second session management network element.

In the foregoing design, the first session management network element may subscribe to the location information of the at least one second terminal device, so that the at least one second session management network element can perform reporting in time when location information of any second terminal device changes, to determine, in time, an edge application server that better meets the requirements of the plurality of terminal devices.

According to a fifth aspect, an embodiment of this application provides a communication method. The method may be performed by a second session management network element, or may be performed by an apparatus (for example, a chip) having a function of the second session management network element. The second session management network element is, for example, a second SMF. For ease of description, the following provides descriptions by using an example in which the method is performed by the second session management network element. The method includes: sending, to a first session management network element, location information of at least one second terminal device managed by the second session management network element; receiving location information of a plurality of terminal devices from the first session management network element, where the plurality of terminal devices include the at least one second terminal device and a first terminal device managed by the first session management network element, and the location information of the plurality of terminal devices is used to determine a common edge application server of the plurality of terminal devices; and sending the location information of the plurality of terminal devices to a second edge application server discovery network element.

In a possible design, the method further includes: receiving third indication information from a network exposure network element or a policy control network element, where the third indication information indicates the second session management network element to send, to the first session management network element, the location information of the at least one second terminal device managed by the second session management network element.

In a possible design, the method further includes: receiving second indication information from the first session management network element, where the second indication information indicates that the first session management network element subscribes to the location information of the second terminal device managed by the at least one second session management network element.

According to a sixth aspect, an embodiment of this application provides a communication method. The method may be performed by an edge application server discovery network element, or may be performed by an apparatus (for example, a chip) having a function of the edge application server discovery network element. The edge application server discovery network element is, for example, an edge application server discovery function (edge application server discovery function, EASDF). For ease of description, the following provides descriptions by using an example in which the method is performed by the edge application server discovery network element. The method includes: receiving location information of a plurality of terminal devices from a first session management network element, and receiving a first request message from a first terminal device, where the first request message is used to request to discover an edge application server, and the first terminal device belongs to the plurality of terminal devices; determining information about a common edge application server of the plurality of terminal devices based on the location information of the plurality of terminal devices; and sending the information about the common edge application server to the first terminal device.

It should be understood that the edge application server discovery network element may receive the location information of the plurality of terminal devices from the first session management network element and receive the first request message from the first terminal device in any sequence. This is not limited in embodiments of this application.

In a possible design, the method further includes: sending the information about the common edge application server to a unified data repository network element.

In a possible design, before the determining the information about the common edge application server of the plurality of terminal devices based on the location information of the plurality of terminal devices, the method further includes: determining that the information about the common edge application server of the plurality of terminal devices does not exist in the unified data repository network element.

In a possible design, the determining the information about the common edge application server of the plurality of terminal devices based on the location information of the plurality of terminal devices includes: sending a second request message to a domain name server, where the second request message is used to request to separately determine an edge application server for the plurality of terminal devices, and the second request message further includes the location information of the plurality of terminal devices; and receiving a response message from the domain name server, where the response message carries information about a plurality of edge application servers, and the common edge application server is one of the plurality of edge application servers.

According to a seventh aspect, an embodiment of this application provides a communication method. The method may be performed by a policy control network element or a network exposure network element, or may be performed by an apparatus (for example, a chip) having a function of the policy control network element or the network exposure network element. The policy control network element is, for example, a PCF, and the network exposure network element is, for example, an NEF. The method includes: sending second indication information to a second session management network element, where the second indication information indicates that a first session management network element subscribes to location information of a second terminal device managed by at least one second session management network element; and sending first indication information to the first session management network element, where the first indication information indicates the first session management network element to send location information of a plurality of terminal devices to the at least one second session management network element, the location information of the plurality of terminal devices is used to determine a common edge application server of the plurality of terminal devices, and the plurality of terminal devices include terminal devices served by the first session management network element and the at least one second session management network element.

In a possible design, before the sending the second indication information to the second session management network element, the method further includes: receiving, from a unified data repository network element, an identifier of the first session management network element and an identifier of the at least one second session management network element.

According to an eighth aspect, an embodiment of this application provides a communication method. The method may be performed by a communication system, and the communication system includes the session management network element according to the first aspect and the unified data repository network element according to the third aspect. The method includes: The unified data repository network element receives a plurality of DNAIs from a plurality of session management network elements, where the plurality of session management network elements include a first session management network element, and the plurality of DNAIs include a first DNAI corresponding to the first session management network element; the unified data repository network element sends the plurality of DNAIs to the first session management network element, where the plurality of DNAIs include the first DNAI; and the first session management network element determines a common DNAI of the plurality of session management network elements from the plurality of DNAIs.

In a possible design, the method further includes: The first session management network element sends the common data network access identifier to the unified data repository network element; and the unified data repository network element sends the common data network access identifier to a session management network element other than the first session management network element in the plurality of session management network elements.

In a possible design, the communication system further includes the policy control network element according to any one of the possible designs of the second aspect, and correspondingly, the method further includes any method performed by the policy control network element.

Certainly, the session management network element in the communication system may further perform the method according to any one of the possible designs of the first aspect, the policy control network element may further perform the method according to any one of the possible designs of the second aspect, and the unified data repository network element may further perform the method according to any one of the possible designs of the third aspect. Details are not described herein again.

According to a ninth aspect, an embodiment of this application provides a communication method. The method may be performed by a communication system. The communication system includes the first session management network element according to the fourth aspect, the second session management network element according to the fifth aspect, and the edge application server discovery network element according to the sixth aspect. The method includes: The first session management network element obtains location information of a first terminal device, where the first terminal device is a terminal device managed by the first session management network element; the first session management network element manages and receives location information of at least one second terminal device from at least one second session management network element, where different session management network elements in the at least one second session management network element manage different terminal devices in the at least one second terminal device; the first session management network element sends location information of a plurality of terminal devices to a first edge application server discovery network element, where the plurality of terminal devices include the first terminal device and the at least one second terminal device; and the first edge application server determines information about a common edge application server of the plurality of terminal devices based on the location information of the plurality of terminal devices.

Certainly, the first session management network element in the communication system may further perform the method according to any one of the possible designs of the fourth aspect, the second session management network element may further perform the method according to any one of the possible designs of the fifth aspect, and the edge application server discovery network element may further perform the method according to any one of the possible designs of the sixth aspect. Details are not described herein again.

Optionally, the communication system further includes the policy control network element or the network exposure network element according to the seventh aspect.

According to a tenth aspect, an embodiment of this application provides a communication apparatus. The communication apparatus may be the session management network element according to the first aspect, or a software module or a hardware module (for example, a chip) configured in the session management network element, or a device having a function of the session management network element. The communication apparatus includes a corresponding means (means) or module configured to perform the method according to any one of the first aspect or the possible designs of the first aspect. For example, the communication apparatus includes a processing module (sometimes also referred to as a processing unit) and a transceiver module (sometimes also referred to as a transceiver unit).

For example, the transceiver module is configured to: send, to a unified data repository network element, a first DNAI corresponding to a first session management network element, and receive a plurality of DNAIs from the unified data repository network element, where the plurality of DNAIs are determined by the unified data repository network element based on a plurality of DNAIs from a plurality of session management network elements, the plurality of session management network elements include the first session management network element, and the plurality of DNAIs include the first DNAI. The processing module is configured to determine, from the plurality of DNAIs, a common DNAI corresponding to the plurality of session management network elements.

According to an eleventh aspect, an embodiment of this application provides a communication apparatus. The communication apparatus may be the policy control network element according to the second aspect, or a software module or a hardware module (for example, a chip) configured in the policy control network element, or a device having a function of the policy control network element. The communication apparatus includes a corresponding means (means) or module configured to perform the method according to any one of the second aspect or the possible designs of the second aspect. For example, the communication apparatus includes a processing module (sometimes also referred to as a processing unit) and a transceiver module (sometimes also referred to as a transceiver unit).

For example, under control of the processing module, the transceiver module receives a first DNAI from a first session management network element, where the first DNAI corresponds to the first session management network element; sends the first DNAI to a unified data repository network element; receives a plurality of DNAIs from the unified data repository network element, where the plurality of DNAIs are determined by the unified data repository network element based on a plurality of DNAIs from a plurality of session management network elements, the plurality of session management network elements include the first session management network element, and the plurality of DNAIs include the first DNAI; and sends the plurality of DNAIs to the first session management network element, where the plurality of DNAIs are used by the first session management network element to determine a common DNAI of the plurality of session management network elements.

According to a twelfth aspect, an embodiment of this application provides a communication apparatus. The communication apparatus may be the unified data repository network element according to the third aspect, or a software module or a hardware module (for example, a chip) configured in the unified data repository network element, or a device having a function of the unified data repository network element. The communication apparatus includes a corresponding means (means) or module configured to perform the method according to any one of the third aspect or the possible designs of the third aspect. For example, the communication apparatus includes a processing module (sometimes also referred to as a processing unit) and a transceiver module (sometimes also referred to as a transceiver unit).

For example, under control of the processing module, the transceiver module receives a plurality of DNAIs from a plurality of session management network elements, where the plurality of session management network elements include a first session management network element; and sends the plurality of DNAIs to the first session management network element, where the plurality of DNAIs include a first DNAI corresponding to the first session management network element, and the plurality of DNAIs are used by the first session management network element to determine a common DNAI of the plurality of session management network elements.

According to a thirteenth aspect, an embodiment of this application provides a communication apparatus. The communication apparatus may be the first session management network element according to the fourth aspect, or a software module or a hardware module (for example, a chip) configured in the first session management network element, or a device having a function of the first session management network element. The communication apparatus includes a corresponding means (means) or module configured to perform the method according to any one of the fourth aspect or the possible designs of the fourth aspect. For example, the communication apparatus includes a processing module (sometimes also referred to as a processing unit) and a transceiver module (sometimes also referred to as a transceiver unit).

For example, under control of the processing module, the transceiver module obtains location information of a first terminal device, where the first terminal device is a terminal device managed by the first session management network element; receives location information of at least one second terminal device from at least one second session management network element, where different second session management network elements in the at least one second session management network element manage different terminal devices in the at least one second terminal device; and sends location information of a plurality of terminal devices to a first edge application server discovery network element, where the plurality of terminal devices include the first terminal device and the at least one second terminal device, and the location information of the plurality of terminal devices is used by the first edge application server discovery network element to determine a common edge application server of the plurality of terminal devices.

According to a fourteenth aspect, an embodiment of this application provides a communication apparatus. The communication apparatus may be the second session management network element according to the fifth aspect, or a software module or a hardware module (for example, a chip) configured in the second session management network element, or a device having a function of the second session management network element. The communication apparatus includes a corresponding means (means) or module configured to perform the method according to any one of the fifth aspect or the possible designs of the fifth aspect. For example, the communication apparatus includes a processing module (sometimes also referred to as a processing unit) and a transceiver module (sometimes also referred to as a transceiver unit).

For example, under control of the processing module, the transceiver module sends, to a first session management network element, location information of at least one second terminal device managed by the second session management network element; receives location information of a plurality of terminal devices from the first session management network element, where the plurality of terminal devices include the at least one second terminal device and a first terminal device managed by the first session management network element, and the location information of the plurality of terminal devices is used to determine a common edge application server of the plurality of terminal devices; and sends the location information of the plurality of terminal devices to a second edge application server discovery network element.

According to a fifteenth aspect, an embodiment of this application provides a communication apparatus. The communication apparatus may be the edge application server discovery network element according to the sixth aspect, or a software module or a hardware module (for example, a chip) configured in the edge application server discovery network element, or a device having a function of the edge application server discovery network element. The communication apparatus includes a corresponding means (means) or module configured to perform the method according to any one of the sixth aspect or the possible designs of the sixth aspect. For example, the communication apparatus includes a processing module (sometimes also referred to as a processing unit) and a transceiver module (sometimes also referred to as a transceiver unit).

For example, the transceiver module is configured to: receive location information of a plurality of terminal devices from a first session management network element, and receive a first request message from a first terminal device, where the first request message is used to request to discover an edge application server, and the first terminal device belongs to the plurality of terminal devices. The processing module is configured to determine information about a common edge application server of the plurality of terminal devices based on the location information of the plurality of terminal devices. The transceiver module is further configured to send the information about the common edge application server to the first terminal device.

According to a sixteenth aspect, an embodiment of this application provides a communication system. The communication system includes the communication apparatus according to the ninth aspect to the eleventh aspect.

According to a seventeenth aspect, an embodiment of this application provides a communication system. The communication system includes the communication apparatus according to the twelfth aspect to the fourteenth aspect.

According to an eighteenth aspect, an embodiment of this application provides a communication apparatus, including a processor and a communication interface. The communication interface is configured to: receive a signal from an apparatus other than the communication apparatus and transmit the signal to the processor, or send a signal from the processor to an apparatus other than the communication apparatus. The processor executes code instructions through a logic circuit to implement the method according to any one of the first aspect to the eighth aspect and the possible designs of the first aspect to the eighth aspect.

According to a nineteenth aspect, an embodiment of this application provides a chip system. The chip system includes a processor and an interface. The processor is configured to invoke instructions from the interface and run the instructions; and when the processor executes the instructions, the method according to any one of the first aspect to the eighth aspect and the possible designs of the first aspect to the eighth aspect is implemented.

According to a twentieth aspect, an embodiment of this application provides a computer-readable storage medium. The computer-readable storage medium is configured to store a computer program or instructions, and when the computer program or the instructions is/are run, the method according to any one of the first aspect to the eighth aspect and the possible designs of the first aspect to the eighth aspect is implemented.

According to a twenty-first aspect, an embodiment of this application provides a computer program product including instructions. When the computer program product runs on a computer, the method according to any one of the first aspect to the eighth aspect and the possible designs of the first aspect to the eighth aspect is implemented.

For beneficial effect of any technical solution according to the second aspect to the third aspect and the fifth aspect to the twenty-first aspect, refer to the beneficial effect described in the first aspect or the fourth aspect. No repeated description is provided.

### BRIEF DESCRIPTION OF DRAWINGS

FIG. 1 is a diagram of a scenario to which an embodiment of this application is applicable;
FIG. 2 is a diagram of another scenario to which an embodiment of this application is applicable;
FIG. 3 is a diagram of still another scenario to which an embodiment of this application is applicable;
FIG. 4 is a diagram of a method for determining a common DNAI;
FIG. 5 is a diagram of a communication method according to an embodiment of this application;
FIG. 6 and FIG. 7 are diagrams of two scenarios to which an embodiment of this application is applicable;
FIG. 8 is a diagram of a method for determining a common EAS;
FIG. 9 is a diagram of another communication method according to an embodiment of this application;
FIG. 10A and FIG. 10B are a diagram of still another communication method according to an embodiment of this application;
FIG. 11 is a diagram of yet another communication method according to an embodiment of this application;
FIG. 12 is a diagram of a structure of a communication apparatus according to an embodiment of this application; and
FIG. 13 is a diagram of a structure of another communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

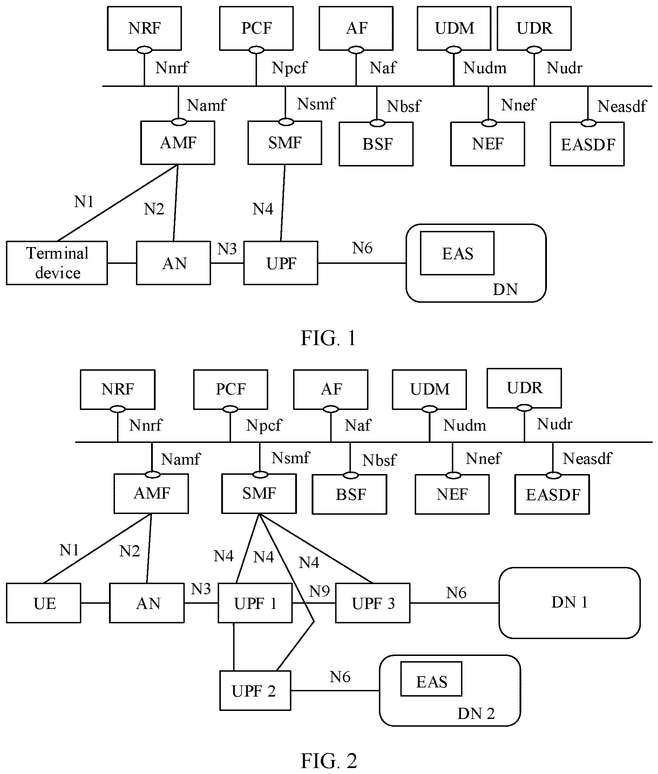

FIG. 1 is a diagram of a scenario to which an embodiment of this application is applicable, or FIG. 1 may be considered as a diagram of a structure of a communication system. As shown in FIG. 1, the scenario includes a terminal device, an access network, and a core network. The terminal device accesses the core network through the access network. The following separately describes the three parts.

The terminal device is a device having a wireless transceiver function, and may be a fixed device, a mobile device, a handheld device, a wearable device, a vehicle-mounted device, or a wireless apparatus (for example, a communication module or a chip system) disposed in the foregoing device. The terminal device is configured to connect to a person, an object, a machine, and the like, and may be widely used in various scenarios. For example, the terminal device includes but is not limited to terminal devices in scenarios such as cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (telemedicine), a smart grid (smart grid), smart furniture, smart office, a smart wearable, smart transportation, a smart city (smart city), an uncrewed aerial vehicle, and a robot. The terminal device may be sometimes referred to as user equipment (user equipment, UE), a terminal, an access station, a UE station, a remote station, a wireless communication device, a user apparatus, or the like.

The access network includes an access network element. The access network element is a device having a wireless transceiver function, and is configured to communicate with the terminal device. The access network element includes but is not limited to a base station (BTS, NodeB, eNodeB/eNB, or gNodeB/gNB) in the foregoing communication system, a transmission reception point (transmission reception point, TRP), a base station subsequently evolved in 3GPP, an access node in a wireless fidelity (wireless fidelity, Wi-Fi) system, a wireless relay node, a wireless backhaul node, a satellite, an uncrewed aerial vehicle, or the like. The base station may be a macro base station, a micro base station, a picocell base station, a small cell, a relay station, or the like. A plurality of base stations may support networks of a same access technology mentioned above, or may support networks of different access technologies mentioned above. The base station may include one or more co-site or non-co-site transmission reception points. Alternatively, the access network element may be a radio controller, a central unit (central unit, CU) that may alternatively be referred to as an aggregation unit, and/or a distributed unit (distributed unit, DU) in a cloud radio access network (cloud radio access network, C(R)AN) scenario. Alternatively, the access network element may be a server, a wearable device, a vehicle-mounted device, or the like. For example, an access network element in a vehicle-to-everything (vehicle-to-everything, V2X) technology may be a road side unit (road side unit, RSU). An example in which the access network element is the base station is used below for description. A plurality of access network elements in the communication system may be base stations of a same type, or may be base stations of different types. The base station may communicate with the terminal device, or may communicate with the terminal device through a relay station. The terminal device may communicate with a plurality of base stations in different access technologies.

A network element in embodiments of this application may be a single device, or may be an apparatus integrating a plurality of devices. The network element shown in embodiments of this application may alternatively be a logical concept, for example, a software module, or a network function corresponding to a service provided by each network element. The network function may be understood as a virtualized function in virtualization implementation, or may be understood as a network function that provides a service in a service-oriented network. This is not specifically limited in embodiments of this application.

The core network includes core network elements and DNs. The core network element is configured to implement at least one of functions such as mobility management, data processing, session management, and policy and charging. Names of devices that implement core network functions in systems using different access technologies may be different. This is not limited in embodiments of this application. A 5th generation (5th generation, 5G) communication system is used as an example. The core network element includes an access and mobility management function (access and mobility management function, AMF), a session management function (session management function, SMF), a user plane function (user plane function, UPF), or the like. The DN in FIG. 1 is, for example, a local (local) DN. Optionally, UE may access a data network (data network, DN) in the core network in an access protocol data unit session anchor (protocol data unit session anchor, PSA) manner or an uplink classifier (uplink classifier, ULCL) manner.

The core network elements may include network elements such as a network repository (or storage) function (network repository function, NRF), a policy control function (policy control function, PCF), an application function (application function, AF), a unified data management function (unified data management, UDM), a unified data repository (unified data repository, UDR) function, an access and mobility management function (access and mobility management function, AMF), an SMF, a binding support function (binding support function, BSF), a network exposure function (network exposure function, NEF), an edge application server discovery function (edge application server discovery function, EASDF), and a UPF. The following describes functions of parts in the core network.
1. The NRF is responsible for registration, storage, and management of a network function.
2. The PCF is responsible for policy control functions, including session-level or service flow-level charging, quality of service (quality of service, QoS) bandwidth guarantee, mobility policy management, and terminal device access policy.
3. The AF is a function network element configured to provide various business services, can interact with the core network through the NEF network element, and can interact with a policy management framework to perform policy management. It should be noted that, during actual application, the AF may be classified into two types. One type belongs to a core network element, and the other type belongs to a third-party application server.
4. The UDM is responsible for unified data management functions, including subscription management for a user, access authorization, and authentication information generation.
5. The UDR is configured to improve a unified data repository service.
6. The AMF is mainly responsible for an access management function.
7. The SMF is configured to manage creation, deletion, and the like of a PDU session of a user, maintaining a PDU session context, and forwarding user plane network element information to the PCF. The PCF network element is configured to generate and manage a user, a session, or a QoS flow processing policy.
8. The BSF is responsible for session binding.
9. The NEF is configured to: provide a framework, authentication, and an interface that are related to network capability exposure, and transfer information between a network function of a 5G system and another network function.
10. The EASDF is configured to discover an EAS.
11. The UPF is responsible for user plane functions of the core network, including providing user plane functions such as forwarding and processing of a user packet, a connection to a DN, a session anchor, and QoS policy enforcement.
12. The DN is used to provide a data transmission service for a user, and the DN is, for example, an IP multimedia service (IP multimedia service, IMS) or the internet (internet). The UE may access the DN by using a session established between the UE and the DN. A plurality of EASs may be deployed in the DN.

Nnrf, Npcf, Naf, Nudm, Nudr, Namf, Nsmf, Nbsf, Nnef and the Neasdf in FIG. 1 are service-oriented interfaces provided by the NRF, the PCF, the AF, the UDM, the UDR, the AMF, the SMF, the BSF, the NEF, and the EASDF respectively, and are used to invoke corresponding service-oriented operations. In addition, an N1 interface in FIG. 1 indicates an interface between the UE and a core network control plane. An N2 interface indicates a communication interface between an access network element and the core network control plane. An N3 interface indicates a communication interface between the access network element and the UPF, and is used to transmit user data. An N4 interface is a communication interface between the SMF and the UPF, and is used to perform policy configuration and the like on the UPF. An N6 interface is a communication interface between the UPF and the DN.

FIG. 2 is a diagram of another scenario to which an embodiment of this application is applicable, or FIG. 2 may be considered as a diagram of a structure of a communication system. As shown in FIG. 2, the scenario includes UE, an access network, and a core network. An example in which a terminal device is UE is used in FIG. 2. Different from FIG. 1, FIG. 2 shows a plurality of UPFs (such as a UPF 1, a UPF 2, and a UPF 3) and a plurality of DNs (such as a DN 1 and a DN 2).

The access network includes an access network element. For descriptions of the terminal device and the access network element on the access network, refer to the content described in the foregoing explanation and description part. Details are not described herein again.

The core network includes core network elements, the DN 1, and the DN 2. The DN 1 is, for example, an edge part of the DN, and the DN 2 is, for example, a central (central) DN. Optionally, the UPF 1 may implement a function of a ULCL or a breakout point (BP), to distribute a part of data services to the DN 1, and distribute a part of data services to the DN 2. The UE can access the DN 2 through the UPF 2 and access the DN 1 through the UPF 3. The UPF 2 and the UPF 3 equivalently implement a function of a PSA.

The core network elements may include network elements such as an NRF, a PCF, an AF, a UDM, a UDR, an AMF, an SMF, a BSF, an NEF, and an EASDF. For functions and interfaces of the network elements included in FIG. 2, refer to the content described in FIG. 1.

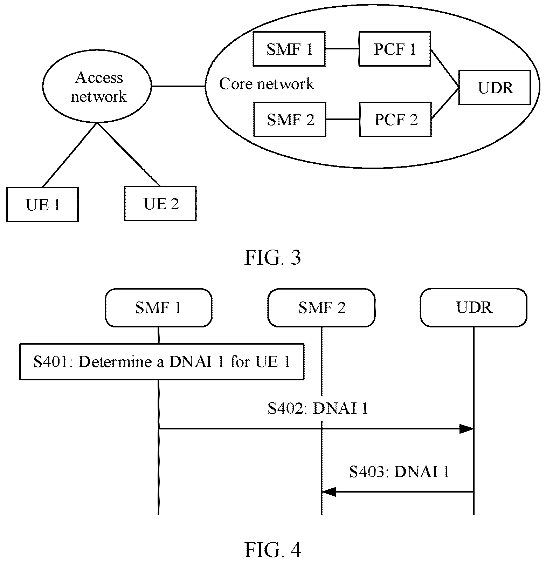

In some scenarios (for example, edge computing), a common DNAI sometimes needs to be determined for a plurality of UEs. For example, in a multi-user scenario (for example, a multi-user game scenario), registration information and game information of the plurality of UEs are stored in a same data network. Therefore, the plurality of UEs need to access the same data network. Accessing the same data network is, for example, accessing a same campus. FIG. 3 is a diagram of still another scenario to which an embodiment of this application is applicable, or FIG. 3 may be considered as a diagram of an architecture of a multi-user scenario or a communication system.

As shown in FIG. 3, the scenario includes a plurality of UEs participating in interaction, and the plurality of UEs access a core network through an access network. The core network includes a plurality of SMFs, at least one PCF, and a UDR. Each of the plurality of SMFs serves at least one of the plurality of UEs, in other words, each of the plurality of SMFs manages at least one of the plurality of UEs. Each of the at least one PCF serves at least one of the plurality of UEs, in other words, each of the at least one PCF manages at least one of the plurality of UEs. The at least one PCF may access the UDR to obtain data.

In FIG. 3, an example in which the plurality of SMFs include two SMFs: an SMF 1 and an SMF 2, the at least one PCF includes two PCFs: a PCF 1 and a PCF 2, and the plurality of UEs include two UEs: UE 1 and UE 2 is used. Actually, quantities of SMFs, PCFs, and UEs are not limited. In addition, in FIG. 3, an example in which the SMF 1 and the PCF 1 manage (or serve) the UE 1, and the SMF 2 and the PCF 2 manage (or serve) the UE 2 is used. Actually, a quantity of UEs managed by the SMF 1 and the PCF 1 is not limited, and a quantity of UEs managed by the SMF and the PCF 2 is not limited.

Optionally, the PCF 1 and the PCF 2 in FIG. 3 may be different PCFs, or may be a same PCF.

In the scenario shown in FIG. 3, with reference to a diagram of a method for determining a common DNAI shown in FIG. 4, the following describes a manner of determining the common DNAI for a plurality of UEs. The method shown in FIG. 4 includes S401 to S403. The following separately describes the steps.

S401: The SMF 1 determines a DNAI 1 for the UE 1. For example, the SMF 1 may select the DNAI 1 closest to the UE 1.

S402: The SMF 1 sends the DNAI 1 to the UDR. In this way, the UDR may store the DNAI 1.

S403: The UDR sends the DNAI 1 to the SMF 2.

When determining that the UDR stores a DNAI related to the UE 1 and the UE 2, the SMF 2 may use, as a DNAI corresponding to the UE 2, the DNAI 1 stored in the UDR. In this way, the same DNAI is selected for the UE 1 and the UE 2.

It can be learned from the procedure shown in FIG. 4 that, in this manner, the SMF 1 considers only a requirement of the UE 1, and consequently, the determined DNAI 1 may not meet a requirement of the UE 2. For example, the SMF 2 may not support the DNAI 1, and consequently, the UE 2 cannot access a DN corresponding to the DNAI 1. Alternatively, the UE 2 may be excessively far away from a DN corresponding to the DNAI 1, and consequently, an access delay of the UE 2 is excessively large.

In view of this, an embodiment of this application provides a communication method. In the method, one session management network element (for example, an SMF) corresponding to a plurality of UEs may determine a common DNAI for the plurality of UEs based on DNAIs of a plurality of SMFs corresponding to the plurality of UEs. In this way, a requirement of specific UE is considered, and requirements corresponding to a plurality of UEs are considered, so that the common DNAI that better meets the requirements of the plurality of UEs can be determined.

With reference to the accompanying drawings, the following describes the method provided in embodiments of this application. In the accompanying drawings corresponding to embodiments of this application, all steps represented by using dashed lines are optional steps.

Embodiments of this application are described by using an example in which a plurality of session management network elements include two SMFs: a first SMF and a second SMF, a plurality of policy control network elements include a first PCF and a second PCF, and a plurality of terminal devices include first UE and second UE. Actually, quantities of the plurality of session management network elements, the plurality of policy control network elements, and the plurality of terminal devices are not limited. In embodiments of this application, the first SMF is, for example, the SMF 1 in FIG. 3; the second SMF is, for example, the SMF 2 in FIG. 3; the first UE is, for example, the UE 1 in FIG. 3; the second UE is, for example, the UE 2 in FIG. 3; the first PCF is, for example, the PCF 1 in FIG. 3; the second PCF is, for example, the PCF 2 in FIG. 3; the UDR is, for example, the UDR in any one of FIG. 1 to FIG. 3; and an AF is, for example, the AF in FIG. 1 or FIG. 2. In addition, in embodiments of this application, an example in which the first SMF and the first PCF manage the first UE, and the second SMF and the second PCF manage the second UE is used. Certainly, actually, there may be a plurality of UEs managed by the first SMF and the first PCF, and there may also be a plurality of UEs managed by the second SMF and the second PCF. In addition, an example in which the terminal device is UE is used in embodiments of this application. It should be understood that, if the technical solutions provided in embodiments of this application are applied to another communication system, a name and/or a function of a network element may vary. This is not limited herein.

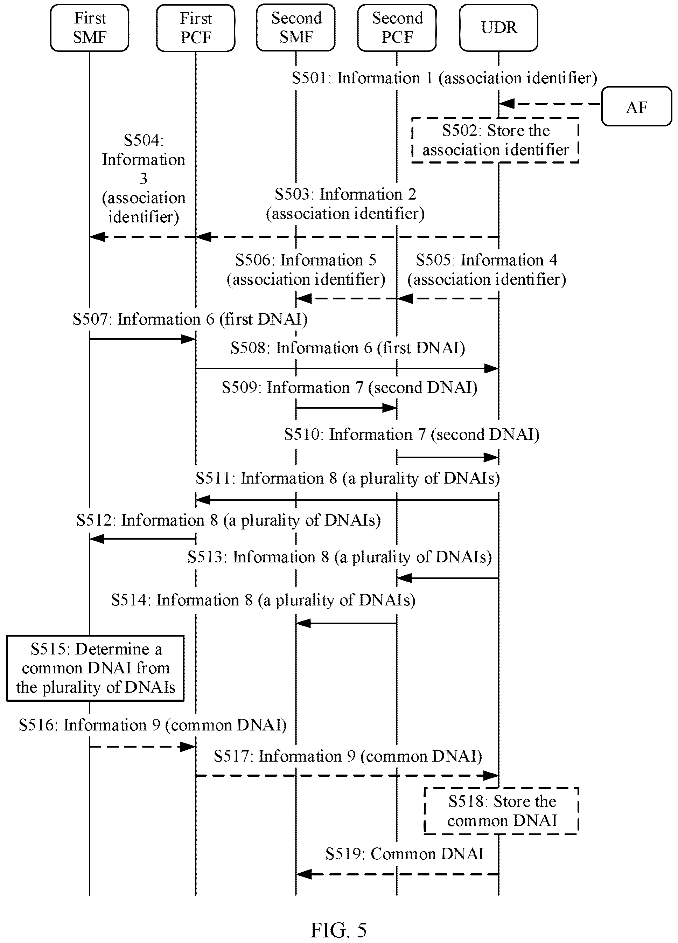

FIG. 5 is a diagram of a communication method according to an embodiment of this application. The diagram includes the following steps.

S501: An AF sends information 1 to a UDR. Correspondingly, the UDR receives the information 1 from the AF.

For example, the AF may send the information 1 to the UDR through an NEF. Alternatively, the AF may directly send the information 1 to the UDR.

The AF determines that a common DNAI needs to be determined for first UE and second UE, and the AF may send the information 1 to the UDR, where the information 1 indicates to determine the common DNAI for the first UE and the second UE. The information 1 may be, for example, a traffic influence (traffic influence) request.

For example, the information 1 may include an association identifier. The association identifier indicates the first UE and the second UE, or it is understood that the first UE and the second UE correspond to a same association identifier. The information 1 may indicate (or may be referred to as identify) a UE group (including the first UE and the second UE) by using the association identifier, and the information 1 indicates, by using the association identifier, to determine the common DNAI for the first UE and the second UE.

Alternatively, the information 1 may include a first flag. The information 1 may indicate, by using the first flag, to determine the common DNAI for the first UE and the second UE, or it is understood that the first flag indicates to determine the common DNAI for the first UE and the second UE. The common DNAI means that the DNAI is both a DNAI corresponding to the first UE and a DNAI corresponding to the second UE.

Alternatively, the information 1 includes identifiers of a plurality of UEs (including the first UE and the second UE), and an identifier of the first UE may be a subscription permanent identifier (subscription permanent identifier, SUPI) of the first UE or a generic public subscription identifier (generic public subscription identifier, GPSI) of the first UE. Alternatively, an identifier of the second UE may be an SUPI, a GPSI, or the like of the second UE.

Certainly, the information 1 may alternatively include at least one of the association identifier, the first flag, and the identifiers of the plurality of UEs. In FIG. 5, an example in which the information 1 indicates, by using the association identifier, the first UE and the second UE to determine the common DNAI is used for illustration.

S502: The UDR stores the association identifier.

If the information 1 includes the association identifier, the UDR may store (or save) the association identifier. Certainly, if the information 1 further includes the first flag and/or the identifiers of the plurality of UEs, the UDR may further store the first flag and/or the identifiers of the plurality of UEs.

S503: The UDR sends information 2 to a first PCF. Correspondingly, the first PCF receives the information 2 from the UDR.

The information 2 may include at least one of an association identifier, a first flag, and identifiers of a plurality of UEs. For meanings of the first flag and the identifiers of the plurality of UEs, refer to the foregoing descriptions. The information 2 indicates a plurality of UEs that select the common DNAI, namely, the first UE and the second UE. The information 2 carries the association identifier. The association identifier identifies the plurality of UEs that select the common DNAI, or may indicate to select the common DNAI for the plurality of UEs. Alternatively, the information 2 may carry the first flag, and the first flag indicates to select the common DNAI for the plurality of UEs. Alternatively, the information 2 may carry the identifiers of the plurality of UEs, and the identifiers of the plurality of UEs indicate the plurality of UEs that select the common DNAI. In FIG. 5, an example in which the information 2 includes the association identifier is used for illustration.

Optionally, the information 2 may be carried in a data management notification message.

S504: The first PCF sends information 3 to a first SMF. Correspondingly, the first SMF receives the information 3 from the first PCF.

For content of the information 3, refer to the content of the information 2. Optionally, the information 3 may be carried in a session management policy update message.

In another possible implementation, the UDR directly sends the information 3 to the first SMF corresponding to the first UE. In this case, S503 and S504 are optional steps, and are represented by using dashed lines in FIG. 5.

S505: The UDR sends information 4 to a second PCF. Correspondingly, the second PCF receives the information 4 from the UDR.

The information 4 may include at least one of an association identifier, a first flag, and identifiers of a plurality of UEs. For meanings of the first flag and the identifiers of the plurality of UEs, refer to the foregoing descriptions. For functions of the association identifier, the first flag, and the identifiers of the plurality of UEs, refer to the content described in S503. The information 4 indicates the plurality of UEs that select the common DNAI. In FIG. 5, an example in which the information 4 includes the association identifier is used for illustration.

Optionally, the information 4 may be carried in a data management notification message.

S506: The second PCF sends information 5 to a second SMF. Correspondingly, the second SMF receives the information 5 from the second PCF.

For content of the information 5, refer to content of the information 4 in S505. The information 5 may be carried in the session management policy update message.

In another possible implementation, the UDR directly sends the information 5 to the second SMF corresponding to the second UE.

S501 to S506 describe a manner in which the first SMF and the second SMF determine the plurality of UEs that select the same DNAI. If the first SMF and the second SMF determine the plurality of UEs in another manner, the steps S501 to S506 do not need to be performed, and are represented by using dashed lines in FIG. 5.

S507: The first SMF sends information 6 to the first PCF. Correspondingly, the first PCF receives the information 6 from the first SMF.

The information 6 may include a first DNAI. The first DNAI is a DNAI determined by the first SMF, or is understood as a DNAI determined by the first SMF for UE in a UE group served by the first SMF, or is understood as a DNAI corresponding to UE (namely, the first UE) served by the first SMF. The first DNAI may include one or more DNAIs.

The first DNAI is a part or all of DNAIs in a first DNAI set. The first DNAI set includes at least one DNAI, the first DNAI set is a DNAI that can be supported by the first SMF, and the first DNAI set may be in a form of a list. In this case, the first DNAI set may also be referred to as a first DNAI list. The first DNAI set may be prestored by the first SMF, or may be obtained by the first SMF from an NRF. A manner in which the first SMF obtains the first DNAI set is not limited in embodiments of this application.

The first DNAI may include all DNAIs in the first DNAI set. Alternatively, the first DNAI may be a DNAI that corresponds to a data network that is in a first data network set and whose location distance from the first UE is less than or equal to a first distance threshold, and that is determined by the first SMF as a DNAI corresponding to the first SMF. The first distance threshold may be configured in the first SMF according to a protocol or by using the first PCF.

In addition to the first DNAI, the information 6 may further include the identifier of the first UE and/or an identifier of the first SMF, that is, identification information of the first UE corresponding to the first DNAI and/or identification information of the first SMF corresponding to the first DNAI. In this way, an SMF or UE corresponding to these DNAIs can be determined.

Table 1 shows an example of the information 6 according to an embodiment of this application.

**Table 1**

| Identifier of a first SMF | First DNAI |
|---|---|
| SMF ID 1 | DNAI 1, DNAI 2, and DNAI 3 |

As shown in Table 1, the information 6 includes the identifier (namely, 1) of the first SMF, and the first DNAI includes the DNAI 1, the DNAI 2, and the DNAI 3.

S508: The first PCF sends the information 6 to the UDR. Correspondingly, the UDR receives the information 6 from the first PCF. For content of the information 6, refer to the foregoing descriptions.

In another possible implementation, the first SMF may directly send the information 6 to the UDR.

S509: The second SMF sends information 7 to the second PCF. Correspondingly, the second PCF receives the information 7 from the second SMF.

The information 7 may include a second DNAI. The second DNAI is a DNAI determined by the second SMF, or is understood as a DNAI determined by the second SMF for UE in a UE group served by the second SMF, or is understood as a DNAI corresponding to UE (namely, the second UE) served by the second SMF. The second DNAI may include one or more DNAIs.

The second DNAI is a part or all of DNAIs in a second DNAI set. The second DNAI set includes at least one DNAI, the second DNAI set is a DNAI that can be supported by the second SMF, and the second DNAI set may be in a form of a list. In this case, the second DNAI set may also be referred to as a second DNAI list. The second DNAI set may be prestored by the second SMF, or may be obtained by the second SMF from an NRF. A manner in which the second SMF obtains the second DNAI set is not limited in embodiments of this application.

The second DNAI may be the second DNAI set. Alternatively, a DNAI corresponding to the second SMF may be a DNAI that is in the second DNAI set and that corresponds to a data network whose location distance from the second UE is less than or equal to the second distance threshold, and that is determined by the second SMF as the second DNAI.

In addition to the DNAI corresponding to the second SMF, the information 7 may further include the identifier of the second UE and/or an identifier of the second SMF.

Table 2 shows an example of the information 7 according to an embodiment of this application.

**Table 2**

| Identifier of a second SMF | DNAI corresponding to the second SMF |
|---|---|
| SMF ID 2 | DNAI 1, DNAI 2, DNAI 4, and DNAI 5 |

As shown in Table 2, the information 7 includes the identifier (namely, 2) of the second SMF, and the second DNAI includes the DNAI 1, the DNAI 2, the DNAI 4, and the DNAI 5.

S510: The second PCF sends the information 7 to the UDR. Correspondingly, the UDR receives the information 7 from the second PCF. For content of the information 7, refer to the foregoing descriptions.

In another possible implementation, the second SMF may directly send the information 7 to the UDR.

S511: The UDR sends information 8 to the first PCF. Correspondingly, the first PCF receives the information 8 from the UDR. The information 8 may include the first DNAI and the second DNAI. The information 8 may further include an identifier of an SMF or an identifier of UE corresponding to the first DNAI, and an identifier of an SMF or an identifier of UE corresponding to the second DNAI.

For example, the information 8 includes (the DNAI 1, the DNAI 2, 1) and (the DNAI 1, the DNAI 2, the DNAI 4, the DNAI 5, 2). The information 8 indicates that the first DNAI includes the DNAI 1 and the DNAI 2, the first DNAI corresponds to the SMF ID 1, the second DNAI includes the DNAI 1, the DNAI 2, the DNAI 4, and the DNAI 5, and the second DNAI corresponds to the SMF ID 2.

Optionally, the information 8 sent by the UDR to the first PCF may be carried in a data management update response message.

S512: The first PCF sends the information 8 to the first SMF. Correspondingly, the first SMF receives the information 8 from the first PCF.

The information 8 sent by the first PCF to the first SMF may be carried in a policy control update response message.

S513: The UDR sends the information 8 to the second PCF. Correspondingly, the second PCF receives the information 8 from the UDR. For content of the information 8, refer to the foregoing descriptions.

Optionally, the information 8 sent by the UDR to the second PCF may be carried in the data management update response message.

S514: The second PCF sends the information 8 to the second SMF. Correspondingly, the second SMF receives the information 8 from the second PCF.

The information 8 sent by the second PCF to the second SMF may be carried in the policy control update response message.

S515: The first SMF determines the common DNAI from a plurality of DNAIs.

The common DNAI is a common DNA I of the plurality of UEs (such as the first UE and the second UE), or is understood as that the common DNAI is a common DNAI of all UEs in a UE group. The common DNAI may alternatively be understood as a common DNAI of a plurality of SMFs, or may be understood as a common DNAI of each of the plurality of SMFs. Alternatively, it may be described as that the first UE and the second UE share the common DNAI, or it may be understood as that an edge part of a data network corresponding to the common DNAI provides a service for the first UE and the second UE.

The following describes a manner in which the first SMF determines the common DNAI.

The first SMF may determine, as the common DNAI, one DNAI corresponding to the plurality of SMFs in the plurality of DNAIs.

For example, the first SMF may determine, from the plurality of DNAIs, one DNAI corresponding to the plurality of SMFs, and determine the DNAI as the common DNAI.

When DNAIs corresponding to the plurality of SMFs may include M DNAIs, and M is greater than 1, the first SMF may select one DNAI as the common DNAI from the M DNAIs.

For example, if the first DNAI includes the DNAI 1, the DNAI 2, and the DNAI 3, and the second DNAI includes the DNAI 1, the DNAI 2, and the DNAI 4, DNAIs corresponding to both the first SMF and the second SMF include the DNAI 1 and the DNAI 2. In this case, the DNAI 1 or the DNAI 2 may be used as the common DNAI.

For another example, if DNAIs corresponding to the first SMF include the DNAI 1, the DNAI 2, and the DNAI 3, and DNAIs corresponding to the second SMF include the DNAI 1, the DNAI 2, and the DNAI 4, DNAIs corresponding to both the first SMF and the second SMF include the DNAI 1 and the DNAI 2. In this case, the DNAI 1 or the DNAI 2 may be used as the common DNAI.

Alternatively, the first SMF may determine, as the common DNAI from the M DNAIs, a DNAI with a smallest sum of distances to the first UE. A distance between the DNAI and UE is a distance between the UE and a DN corresponding to the DNAI. The first SMF may prestore a location of the first UE, or may obtain location information of the first UE from the first UE. Alternatively, the first SMF may prestore location information of DNs respectively corresponding to the M DNAIs. In this way, a distance between the DNAI and the first UE may be calculated based on the location information of the first UE.

Alternatively, the first SMF may determine, as the common DNAI from the M DNAIs, a DNAI with a smallest sum of distances to the plurality of UEs. A distance between the DNAI and UE is a distance between the UE and a data network corresponding to the DNAI. The first SMF may obtain location information of the second UE from the second SMF. For a manner in which the first SMF obtains the location information of the first UE, refer to the foregoing descriptions. For a manner in which the first SMF obtains location information of DNs respectively corresponding to the M DNAIs, refer to the foregoing descriptions.

For example, the first SMF determines that the M DNAIs include the DNAI 1 and the DNAI 2, a distance between the DNAI 1 and the first UE is 200 m, and a distance between the DNAI 1 and the second UE is 500 m. In this case, a sum of distances between the DNAI 1 and both the first UE and the second UE is 700 m. If a distance between the DNAI 2 and the first UE is 300 m, and a distance between the DNAI 2 and the second UE is 600 m, a sum of distances between the DNAI 2 and both the first UE and the second UE is 900 m. It can be learned that, in the DNAI 1 and the DNAI 2, a sum of distances between the DNAI 1 and the plurality of UEs is less than a sum of distances between the DNAI 2 and the plurality of UEs. Therefore, the first SMF may determine the DNAI 1 as the common DNAI.

S516: The first SMF may send information 9 to the first PCF. Correspondingly, the first PCF receives the information 9 from the first SMF. The information 9 includes the common DANI.

S517: The first PCF sends the information 9 to the UDR. Correspondingly, the UDR receives the information 9 from the first PCF. For content of the information 9, refer to the foregoing content.

In another possible implementation, the first SMF may directly send the information 9 to the UDR. In this case, S516 and S517 do not need to be performed. In other words, S516 and S517 are optional steps, and are represented by using dashed lines in FIG. 5.

S518: The UDR stores the common DNAI. The UDR may store the common DNAI in association with the association identifier, for example, store the common DNAI in service flow influence data information (AF traffic influence data information) corresponding to the association identifier.

S519: The second SMF may obtain the sent common DNAI from the UDR.

For example, the second SMF may send, to the second PCF, a request message used to request a DNAI of the second UE. After the second PCF receives the request message, and the second PCF sends the common DNAI to the second SMF. In this way, both the second SMF and the first SMF determine a same DNAI, which is equivalent to that the first UE and the second UE correspond to the same DNAI. Alternatively, the second SMF may directly request the DNAI of the second UE from the UDR, and the UDR directly sends the common DNAI to the second SMF.

It should be understood that, in the embodiment shown in FIG. 5, an example in which the first SMF determines the common DNAI and stores the common DNAI in the UDR is used. Actually, the second SMF may alternatively determine the common DNAI and store the common DNAI in the UDR, and the first SMF obtains the common DNAI from the UDR. This is not specifically limited in embodiments of this application.

For example, the location of the first UE changes, or the DNAI supported by the first SMF changes. As a result, the DNAI that corresponds to the first SMF and that is determined by the first SMF may also change. In this case, the first SMF may send, to the UDR, an updated DNAI corresponding to the first SMF. In this case, the UDR may separately send a plurality of updated DNAIs to the first SMF and the second SMF. The plurality of updated DNAIs include the updated DNAI corresponding to the first SMF and an updated DNAI corresponding to the second SMF. The first SMF may re-determine a common DNAI based on the plurality of updated DNAIs, to obtain the updated common DNAI. The first SMF may store the updated common DNAI in the UDR, and the second SMF may obtain the updated common DNAI from the UDR, to implement update of the same DNAI of the first UE and the second UE.

Similarly, the DNAI corresponding to the second SMF may also change. In this case, the second SMF may send, to the UDR, an updated DNAI corresponding to the second SMF. In this case, the UDR may separately send a plurality of updated DNAIs to the first SMF and the second SMF. The plurality of updated DNAIs include the DNAI corresponding to the first SMF and an updated DNAI corresponding to the second SMF. The first SMF may re-determine a common DNAI based on the plurality of updated DNAIs, to obtain the updated common DNAI. The first SMF may store the updated common DNAI in the UDR, and the second SMF may obtain the updated common DNAI from the UDR, to implement update of the same DNAI of the first UE and the second UE.

S516 to S519 describe a manner in which the second SMF obtains the common DNAI. When the second SMF obtains the common DNAI in another manner (for example, the first SMF may send the common DNAI to the second SMF), the steps S516 to S519 do not need to be performed, and are represented by using dashed lines in FIG. 5.

In this embodiment of this application, a method for selecting a common DNAI in a case of a plurality of SMFs is provided. When a plurality of UEs are served by a plurality of SMFs, the SMFs provide, for the UDR through the PCF, DNAIs suitable for the UEs served by the SMFs. The UDR stores a plurality of DNAIs from the plurality of SMFs and notifies all the SMFs of the DNAIs. The SMFs determine the common DNAI based on the plurality of DNAIs from the plurality of SMFs. A manner of selecting the common DNAI for the plurality of UEs is provided. In addition, the SMFs determine the common DNAI based on the DNAIs respectively corresponding to the plurality of SMFs, so that the determined DNAI better meets requirements of the plurality of UEs. Furthermore, when a DNAI corresponding to an SMF changes, the common DNAI of the plurality of SMFs may be updated in time, so that a data network corresponding to an updated common DNAI provides a better data service for the plurality of UEs. Moreover, in S510 to S512, an SMF other than the first SMF does not need to determine the common DNAI based on the plurality of DNAIs again. This helps simplify a manner in which another SMF determines the DNAI.

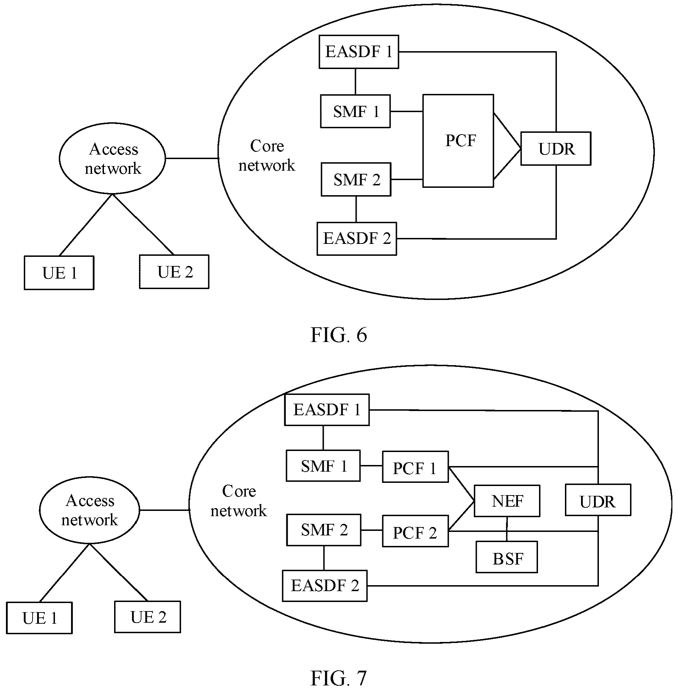

In some scenarios (for example, edge computing), a common EAS sometimes needs to be determined for a plurality of UEs. For example, in a multi-user scenario (for example, a multi-user game scenario), registration information and game information of the plurality of UEs are stored in the EAS. Therefore, the plurality of UEs need to access the EAS. FIG. 6 is a diagram of yet another scenario to which an embodiment of this application is applicable, or FIG. 6 may be considered as a diagram of an architecture of a multi-user scenario or a communication system.

As shown in FIG. 6, the scenario includes a plurality of UEs participating in interaction, and the plurality of UEs access a core network through an access network. The core network includes a plurality of SMFs, a PCF, a plurality of EASDFs, and a UDR. Each of the plurality of SMFs serves at least one of the plurality of UEs, in other words, each of the plurality of SMFs manages at least one of the plurality of UEs. Each of the plurality of EASDFs serves at least one of the plurality of UEs, in other words, each of the at least one EASDF manages at least one of the plurality of UEs. The PCF and the plurality of EASDFs may access the UDR to obtain data.

In FIG. 6, an example in which the plurality of SMFs include two SMFs: an SMF 1 and an SMF 2, the plurality of UEs include two UEs: UE 1 and UE 2, and the plurality of EASDFs include two EASDFs: an EASDF 1 and an EASDF 2 is used. Actually, quantities of SMFs, UEs, and EASDFs are not limited. In FIG. 6, an example in which the SMF 1 and the EASDF 1 manage (or serve) the UE 1, the SMF 2 and the EASDF 2 manage (or serve) the UE 2, and the PCF manages (or serves) the UE 1 and the UE 2 is used. Actually, a quantity of UEs managed by the SMF 1 and the EASDF 1 and a quantity of UEs managed by the SMF 2 and the EASDF 2 are not limited.

FIG. 7 is a diagram of still yet another scenario to which an embodiment of this application is applicable, or FIG. 7 may be considered as a diagram of an architecture of a multi-user scenario or a communication system. A difference from FIG. 6 lies in that a plurality of PCFs are included in FIG. 7.

As shown in FIG. 7, the scenario includes a plurality of UEs participating in interaction, and the plurality of UEs access a core network through an access network. The core network includes a plurality of SMFs, the plurality of PCFs, a plurality of EASDFs, a UDR, an NEF, and a BSF. Each of the plurality of SMFs serves at least one of the plurality of UEs, in other words, each of the plurality of SMFs manages at least one of the plurality of UEs. Each of the plurality of PCFs serves at least one of the plurality of UEs, in other words, each of the plurality of PCFs manages at least one of the plurality of UEs. Each of the plurality of EASDFs serves at least one of the plurality of UEs, in other words, each of the at least one EASDF manages at least one of the plurality of UEs. At least one PCF and the plurality of EASDFs may access the UDR to obtain data. The NEF may communicate with a PCF 1 and a PCF 2, and the NEF may further access the BSF to obtain data.

In FIG. 7, an example in which the plurality of SMFs include two SMFs: an SMF 1 and an SMF 2, the plurality of UEs include two UEs: UE 1 and UE 2, the at least one PCF includes two PCFs: the PCF 1 and the PCF 2, and the plurality of EASDFs include two EASDFs: an EASDF 1 and an EASDF 2 is used. Actually, quantities of SMFs, UEs, PCFs, and EASDFs are not limited. In FIG. 7, an example in which the SMF 1, the PCF 1, and the EASDF 1 manage (or serve) the UE 1, and the SMF 2, the PCF 2, and the EASDF 2 manage (or serve) the UE 2 is used. Actually, a quantity of UEs managed by the SMF 1, the PCF 1, and the EASDF 1 and a quantity of UEs managed by the SMF 2, the PCF 2, and the EASDF 2 are not limited.

In a possible implementation, the PCF 1 and the PCF 2 in FIG. 7 may be different PCFs, or may be a same PCF.

Currently, a manner of determining an EAS for the plurality of UEs is as follows: An EAS discovery function EASDF may receive a domain name server (domain name server) request from the first UE in the plurality of UEs, and determine a common EAS for the first UE. The EASDF may store information about the common EAS in the unified data repository (unified data repository, UDR). When another UE in the plurality of UEs initiates the DNS request, the EASDF may determine information about a target EAS in the UDR as an EAS of the another UE, to determine a same EAS for the plurality of UEs. However, the EAS determined in this manner does not necessarily meet requirements of the plurality of UEs. For example, if a common EAS is far away from some of the plurality of terminal devices, delays of these terminal devices may be large.

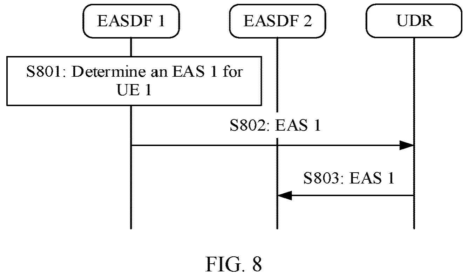

In the scenario shown in FIG. 6 or FIG. 7, the following describes, with reference to a diagram of a method for determining a common EAS shown in FIG. 8, a manner of determining a common EAS for a plurality of UEs. The method shown in FIG. 8 includes S801 to S803. The following separately describes the steps.

S801: The EASDF 1 determines an EAS 1 for the UE 1.

For example, the EASDF 1 may use, as an EAS of the UE 1, the EAS 1 closest to the UE 1.

S802: The EASDF 1 sends the EAS 1 to the UDR. In this way, the UDR may store the EAS 1.

S803: The UDR sends the EAS 1 to the EASDF 2.

When determining that the UDR stores an EAS related to the UE 1 and the UE 2, the EASDF 2 may use, as an EAS corresponding to the UE 2, the EAS 1 stored in the UDR. In this way, the same EAS is selected for the UE 1 and the UE 2.

It can be learned from the procedure shown in FIG. 8 that, in this manner, the EASDF 1 considers only a requirement of the UE 1, and consequently, the determined EAS 1 may not meet a requirement of the UE 2. For example, the UE 2 may fail to access the EAS 1, or the UE 2 may be excessively far away from the EAS 1, and consequently, an access delay of the UE 2 is excessively large.

In view of this, an embodiment of this application provides a communication method. In the method, an EASDF corresponding to one of a plurality of UEs may determine a common EAS for the plurality of UEs based on a plurality of EASs corresponding to the plurality of UEs. In this way, a requirement of specific UE is considered, and requirements of a plurality of UEs are considered, so that the common EAS that better meets the requirements of the plurality of UEs can be determined.

With reference to the accompanying drawings, the following describes the method provided in embodiments of this application. In the accompanying drawings corresponding to embodiments of this application, all steps represented by using dashed lines are optional steps.

Embodiments of this application are described by using an example in which a plurality of session management network elements include two SMFs: a first SMF and a second SMF, a plurality of policy control network elements include a PCF or include a first PCF and a second PCF, and a plurality of terminal devices include first UE and second UE. Actually, quantities of the plurality of session management network elements, the plurality of policy control network elements, and the plurality of terminal devices are not limited. In embodiments of this application, the first SMF is, for example, the SMF 1 in FIG. 6 or FIG. 7; the second SMF is, for example, the SMF 2 in FIG. 6 or FIG. 7; the first UE is, for example, the UE 1 in FIG. 6 or FIG. 7; the second UE is, for example, the UE 2 in FIG. 6 or FIG. 7; the PCF is, for example, the PCF in FIG. 6; the first PCF is, for example, the PCF 1 in FIG. 7; the second PCF is, for example, the PCF 2 in FIG. 7; the UDR is, for example, the UDR in FIG. 6 or FIG. 7; the BSF is, for example, the BSF in FIG. 7; the NEF is, for example, the NEF in FIG. 7; and an AF is, for example, the AF in FIG. 1 or FIG. 2. In addition, in embodiments of this application, an example in which the first SMF and a first EASDF manage the first UE, and the second SMF and a second EASDF manage the second UE is used. In addition, an example in which the terminal device is UE is used in embodiments of this application. It should be understood that, if the technical solutions provided in embodiments of this application are applied to another communication system, a name and/or a function of a network element may vary. This is not limited herein.

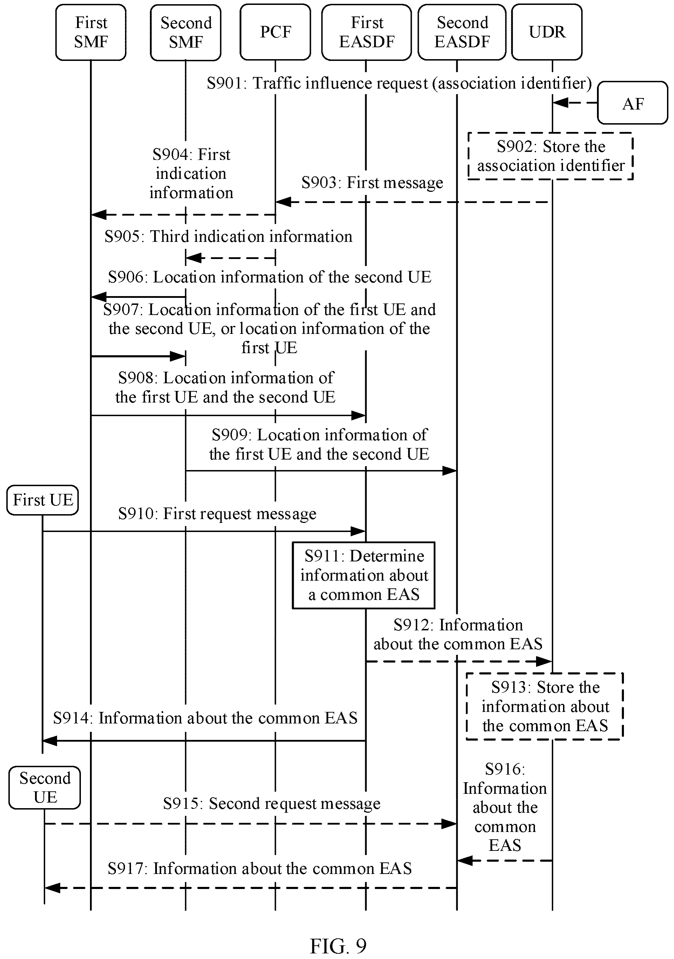

FIG. 9 is a diagram of a communication method according to an embodiment of this application. The diagram includes the following steps.

S901: An AF sends a traffic influence request to a UDR. Correspondingly, the UDR receives the traffic influence request from the AF. The traffic influence request indicates to determine a common EAS for a plurality of UEs (namely, first UE and second UE).

For example, the AF may send the traffic influence request to the UDR through an NEF.

The traffic influence request may include at least one of an association identifier, identifiers of the plurality of UEs, and a first flag. In FIG. 9, an example in which the traffic influence request includes the association identifier is used for illustration. For meanings of the association identifier, the identifiers of the plurality of UEs, and the first flag, refer to the foregoing content in FIG. 5. Repeated parts are not listed again. The traffic influence request may indicate, by using the association identifier, the identifiers of the plurality of UEs, or the first flag, to determine the common EAS for the plurality of UEs. In addition, the traffic influence request may further include a domain name address of the EAS. The domain name address of the EAS is, for example, a fully qualified domain name (fully qualified domain name, FQDN).

Before S901 is performed, a first SMF may determine a first EASDF serving the first UE, and a second SMF may determine a second EASDF serving the second UE. The following describes a manner in which the first SMF determines the first EASDF.

For example, the first UE initiates a session creation request to the first SMF. The session creation request is used to request to create a session, and the session is, for example, a protocol data unit (protocol data unit, PDU) session. The first SMF responds to the session creation request from the first UE. The SMF determines the session, and selects an EASDF (for example, the first EASDF) as a domain name system (domain name system, DNS) resolver for the session. The SMF initiates a DNS context creation request to the first EASDF. The first EASDF creates a DNS context for the PDU session. The first SMF sends a PDU session creation success message to the first UE, and sends an address of the first EASDF as an address of the DNS resolver to the first UE.

The DNS context creation request may include an address of the first UE. The address of the first UE is, for example, an internet protocol address (internet protocol address, IP Address) of the first UE. The DNS context creation request may further include at least one of an SUPI of the first UE, a DN name (DNN), a notification endpoint, a DNS message processing rule, and the like.

The notification endpoint is a callback uniform resource locator (uniform resource locator, URL) required by the first EASDF to return a response to the first SMF. The DNS message processing rule is used by an EASDF (for example, the first EASDF) to match a DNS request message and perform a corresponding operation. The operation is, for example, forwarding the DNS request message and/or returning a DNS response message.

For a manner in which the second SMF determines the second EASDF, refer to a process in which the first SMF determines the first EASDF. Details are not described herein again.

S902: The UDR stores the association identifier.

If the traffic influence request further includes at least one of the following: the identifiers of the plurality of UEs, the first flag, and a domain name of the EAS, the UDR may further store at least one of the following: the identifiers of the plurality of UEs, the first flag, and the domain name of the EAS.

S903: The UDR sends a first message to a PCF. Correspondingly, the PCF receives the first message from the UDR. The first message indicates the plurality of UEs that select the common EAS.

For example, the first message may include the identifiers of the plurality of UEs and/or the association identifier. The first message may indicate, by using the identifiers of the plurality of UEs or the association identifier, the plurality of UEs that select the common EAS.

S901 to S903 describe a manner in which the PCF determines the plurality of UEs that select the common EAS. If the PCF determines the plurality of UEs in another manner, the steps S901 to S903 do not need to be performed, and are represented by using dashed lines in FIG. 9.

S904: The PCF sends first indication information to the first SMF. Correspondingly, the first SMF receives the first indication information from the PCF. The first indication information indicates the first SMF to send location information of the plurality of UEs to the second SMF, that is, indicates that the first SMF is a primary SMF.

The first indication information may include an identifier of the second SMF. The first indication information may further include at least one of an identifier of the first UE, the association identifier, a second flag, and the first flag. The second flag indicates the first SMF to send the location information of the plurality of UEs to the second SMF, that is, indicates that the first SMF is the primary SMF. Optionally, the first indication information may be carried in a session management policy update notification message.

Optionally, after receiving the first indication information, the first SMF may send a first session management policy update response message to the PCF, where the first session management policy update response message indicates that the first SMF has received the first indication information.

S905: The PCF sends third indication information to the second SMF. Correspondingly, the second SMF receives the third indication information from the PCF. The third indication information indicates the second SMF to send location information of the second UE to the first SMF, that is, indicates that the second SMF is a secondary SMF.

The third indication information may include an identifier of the first SMF. The third indication information may further include at least one of an identifier of the second UE, the association identifier, a third flag, and the first flag. The third flag indicates the second SMF to send the location information of the plurality of UEs to the first SMF, that is, indicates that the second SMF is the secondary SMF. Optionally, the third indication information may be carried in the session management policy update notification message.

Optionally, after receiving the third indication information, the second SMF may send a second session management policy update response message to the PCF, where the second session management policy update response message indicates that the first SMF has received the first indication information.

S904 and S905 may be performed in any sequence. For example, S904 is performed before S905; or S905 is performed before S904; or S904 and S905 are simultaneously performed.

Before the PCF performs S904 and S905, the PCF needs to determine the identifiers of the first SMF and the second SMF. The following describes a representation manner in which the PCF determines the first SMF and the second SMF.

Manner 1: The PCF determines, based on the plurality of UEs indicated by the first message, identifiers of SMFs (the first SMF and the second SMF are used as examples in this embodiment of this application) corresponding to the plurality of UEs.

Manner 2: The PCF may receive the identifier of the first SMF and the identifier of the second SMF from the NEF.

For example, the NEF determines the identifiers of the plurality of UEs and/or the association identifier, and determines the identifiers of the first SMF and the second SMF by querying a UDM. The NEF may further obtain, from a BSF, identifiers of PCFs corresponding to the plurality of UEs. In this way, the NEF may send the identifiers of the first SMF and the second SMF to the PCF. Correspondingly, the PCF receives the identifiers of the first SMF and the second SMF from the NEF.

If the first SMF and the second SMF are not distinguished as the primary SMF and the secondary SMF, the steps S904 and S905 do not need to be performed. In other words, S904 and S905 are optional steps, and are represented by using dashed lines in FIG. 9.

S906: The second SMF sends the location information of the second UE to the first SMF. Correspondingly, the first SMF receives the location information of the second UE from the second SMF.

The second SMF may prestore the location information of the second UE, or may obtain the location information of the second UE from the second UE. The location information of the second UE is, for example, user location information (user location information, ULI). The second SMF may directly send the location information of the second UE to the first SMF, or the second SMF may include the location information of the second UE in a first enhanced DNS client subnet option (enhanced DNS client subnet option, ECS Option), and send the first ECS option to the first SMF.

S907: The first SMF sends the location information of the first UE and the second UE or the location information of the first UE to the second SMF. Correspondingly, the second SMF receives the location information of the first UE and the second UE or the location information of the first UE from the first SMF.

In a possible implementation, for example, when S904 and S905 are performed, the first SMF may be used as the primary SMF. After receiving the location information of the second UE from the secondary SMF (including the second SMF), the first SMF obtains the location information of the plurality of UEs (including the location information of the first UE and the location information of the second UE), and sends the location information of the plurality of UEs to the secondary SMF. The location information of the plurality of UEs may be carried in a second ECS option.

In another possible implementation, the first SMF and the second SMF are not distinguished as the primary SMF and the secondary SMF. For example, when S904 and S905 are not performed, the first SMF may send the location information of the first UE to the second SMF. Optionally, the location information of the first UE may be carried in the first ECS option.

In this case, S907 and S906 may be performed in any sequence. For example, S906 is performed before S907; or S907 is performed before S906; or S906 and S907 are simultaneously performed.

Optionally, the first SMF may further send second indication information to the second SMF. Correspondingly, the second SMF may receive the second indication information from the first SMF. The second indication information indicates that the first SMF subscribes to the location information of the second UE managed by the second SMF. In this way, after determining that the location information of the second UE changes, the second SMF may send updated location information of the second UE to the first SMF in time. The first SMF may further send the second indication information to the second SMF before S906, or may send the second indication information to the second SMF after S908. This is not specifically limited in embodiments of this application.

S908: The first SMF sends the location information of the first UE and the second UE to the first EASDF. Correspondingly, the first EASDF receives the location information of the first UE and the second UE from the first SMF.

The second SMF may directly send the location information of the first UE and the second UE to the second EASDF. Alternatively, the first SMF may send the second ECS option to the first EASDF, which is equivalent to sending the location information of the first UE and the second UE. Alternatively, the first SMF may send the first ECS option and a third ECS option to the first EASDF, which is equivalent to sending the location information of the first UE and the second UE.

S909: The second SMF sends the location information of the first UE and the second UE to the second EASDF. Correspondingly, the second EASDF receives the location information of the first UE and the second UE from the second SMF.

For a manner in which the second SMF sends the location information of the first UE and the second UE to the second EASDF, refer to content in which the first SMF sends the location information of the first UE and the second UE to the first EASDF in S908. Details are not described herein again.

S910: The first UE sends a first request message to the first EASDF. Correspondingly, the first EASDF receives the first request message from the first UE. The first request message is used to request to discover the EAS. The first request message may be considered as a DNS request message.

Optionally, S910 may be performed after S909, or may be performed before S906. This is not specifically limited in embodiments of this application.

If S910 is performed after S909, the first SMF and the second SMF determine the location information of the plurality of UEs before the first UE initiates the first request message. In this way, the EASDF can quickly determine the EAS. This helps improve efficiency of determining the EAS and improve user experience.

If S910 is performed before S906, the first SMF and the second SMF collect the location information of the plurality of UEs after the first UE initiates the first request message. In this way, duration in which the first SMF and the second SMF update and maintain the location information of the first UE and the second UE can be reduced.

S911: The first EASDF determines information about the common EAS. The information about the common EAS is, for example, an IP address of the common EAS.

For example, after determining the location information of the plurality of UEs, the first EASDF may send the location information of the plurality of UEs to a DNS server. The first EASDF may send the location information of the plurality of UEs to the DNS server together, or the first EASDF may separately send the location information of the plurality of UEs to the DNS server. For example, the first EASDF may include the location information of the plurality of UEs in the DNS request message, and send the DNS request message to the DNS server.

Further, the DNS server may determine, based on location information of each of the plurality of UEs, an EAS corresponding to each UE. For example, the DNS server may determine one or more EASs for each UE based on the location information of each UE. By analogy, information about a plurality of EASs may be obtained. Information about each of the plurality of EASs includes, for example, an address of each EAS, like an IP address. The DNS server may send the information about the plurality of EASs to the first EASDF, and the DNS server may separately send the information about the plurality of EASs to the first EASDF, or may send the information about the plurality of EASs together to the first EASDF. For example, the DNS server may include the information about the plurality of EASs in a response message, and send the response message to the first EASDF. The first EASDF may determine the common EAS from the plurality of EASs, to obtain the information about the common EAS.

For example, the first EASDF may randomly select one EAS as the common EAS from the plurality of EASs. Alternatively, the first EASDF may determine, as the common EAS, an EAS with a smallest sum of distances to the plurality of UEs. Alternatively, the first EASDF may determine an EAS that is in the plurality of EASs and that is closest to each of the plurality of UEs, count a quantity of times of the closest EAS in the plurality of EASs, and use an EAS with a largest quantity of times as the common EAS.

Before the first EASDF performs S911, the first EASDF determines that the information about the EASs corresponding to the plurality of UEs does not exist in the UDR. In this way, it can be ensured that the common EAS is determined for the plurality of UEs. After determining the common EAS, the first EASDF may send the information about the common EAS to the first UE. For example, the first EASDF may include the information about the common EAS to a DNS response message.

S912: The first EASDF sends the information about the common EAS to the UDR. Correspondingly, the UDR receives the information about the common EAS from the first EASDF.

After determining the common EAS, the first EASDF may further send the information about the common EAS to the first UE and the first SMF. The first SMF may access the EAS according to a policy. The policy is, for example, a ULCL or a BP.

Optionally, if the location information of the first UE changes, the steps S907 to S912 may be performed to re-determine the common EAS. If the location information of the second UE changes, the steps S906 to S912 may be performed to re-determine the common EAS.

S913: The UDR may store the information about the common EAS.

For example, the UDR may store the information about the common EAS in association with the association identifier.

S914: The first EASDF sends the information about the common EAS to the first UE. Correspondingly, the first UE receives the information about the common EAS from the first EASDF.

The first EASDF may directly send the information about the common EAS to the first UE, or may send the information about the common EAS to the first UE through a first PCF and the first SMF in sequence.

S915: The second UE sends a second request message to the second EASDF. Correspondingly, the second EASDF receives the second request message from the second UE. The second request message is used to request to discover the EAS. The second request message may be considered as a DNS request message.

Optionally, S914 may be performed after S909, or may be performed before S906. This is not specifically limited in embodiments of this application. In this embodiment of this application, an example in which S914 is performed after S912 is used for description.

S916: The second EASDF obtains the information about the common EAS from the UDR.

For example, the second EASDF queries the UDR for the information about the EASs corresponding to the plurality of UEs. The UDR determines that there is the information about the common EAS, and may send the information about the common EAS to the second EASDF. After determining the common EAS, the second EASDF may further send the information about the common EAS to the second UE and the second SMF. The second SMF may access the EAS according to a policy. The policy is, for example, a ULCL or a BP.

S917: The second EASDF sends the information about the common EAS to the second UE. Correspondingly, the second UE receives the information about the common EAS from the second EASDF.

S915 to S917 describe a manner in which the second EASDF determines the information about the common EAS. If the second EASDF determines the information about the common EAS in another manner (for example, the first EASDF may send the information about the common EAS to the second EASDF through the first SMF and the second SMF in sequence), S915 to S917 are optional steps, and are represented by using dashed lines in FIG. 9.

This embodiment provides a method for selecting a common EAS for a UE group in a multi-SMF scenario. In the method, an EASDF selects the common EAS based on requirements of a plurality of UEs, so that the selected common EAS better meets the requirements of the plurality of UEs, and a distance between the common EAS and the plurality of UEs is not excessively long. This helps reduce service delays of the plurality of UEs. In addition, a plurality of SMFs may collect location information of the plurality of UEs in advance. After specific UE initiates a DNS request, an EASDF corresponding to the UE selects an appropriate common EAS based on location information of all UEs, stores the common EAS in a UDR, and triggers the plurality of SMFs to update a DNS message processing rule of the EASDF, to simplify a procedure in which the UE in the UE group subsequently initiates a DNS request. This helps improve efficiency of responding to the DNS request from the UE. In addition, when the UE group is served by the plurality of SMFs, and the UE initiates the DNS request, the EASDF may obtain location information of all UEs in the UE group by collecting the location information of the plurality of UEs through the primary and secondary SMFs, to select a most appropriate EAS. This helps reduce difficulty in maintaining the location information of the plurality of UEs by the primary and secondary SMFs.

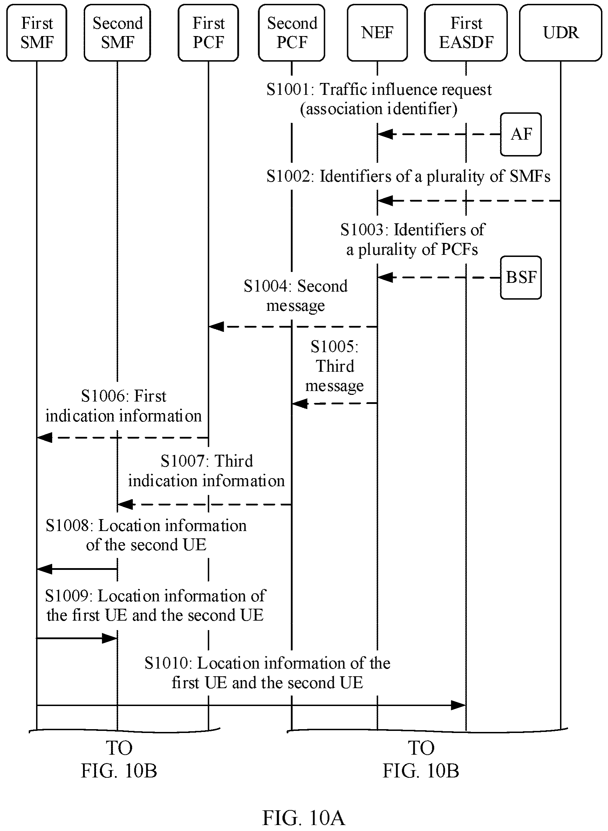

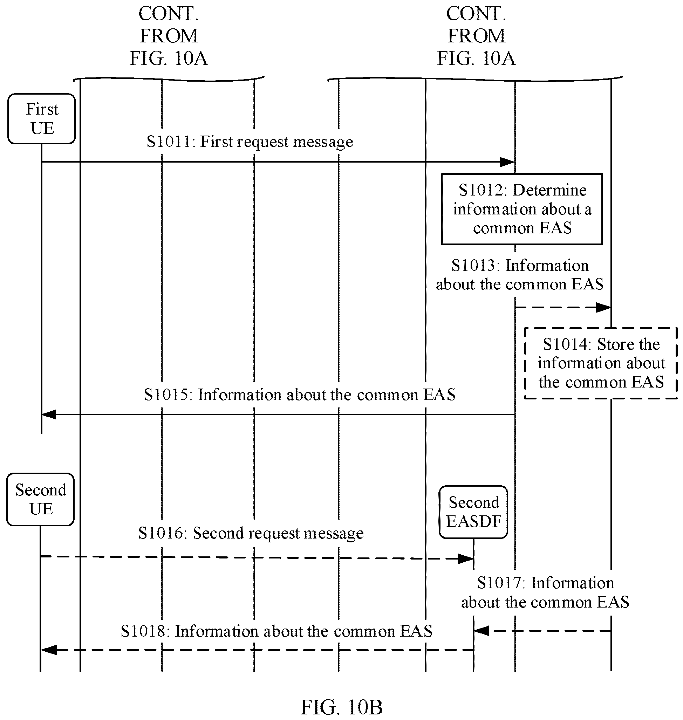

The following describes interaction between network elements in a case in which the PCF determines the identifiers of the first SMF and the second SMF in Manner 2. FIG. 10A and FIG. 10B are a diagram of a communication method according to an embodiment of this application. The diagram includes the following steps.

S1001: An AF sends a traffic influence request to an NEF. Correspondingly, the NEF receives the traffic influence request from the AF. The traffic influence request may further include at least one of an association identifier, identifiers of a plurality of UEs, and a first flag. For meanings of the association identifier, the identifiers of the plurality of UEs, and the first flag, refer to the foregoing descriptions.

S1002: A UDR sends identifiers of a plurality of SMFs to the NEF. Correspondingly, the NEF receives the identifiers of the plurality of SMFs from the UDR.

The NEF queries, based on the association identifier or the identifiers of the plurality of UEs, a UDM for the identifiers of the plurality of SMFs serving the plurality of UEs. Correspondingly, the UDM may send the identifiers of the plurality of SMFs to the NEF.

S1003: A BSF sends identifiers of a plurality of PCFs to the NEF. Correspondingly, the NEF receives the identifiers of the plurality of PCFs from the BSF.

S1004: The NEF sends a second message to a first PCF. Correspondingly, the first PCF receives the second message from the NEF. The second message includes identifier of a first SMF corresponding to the first PCF. Optionally, the second message further includes an identifier of a second SMF, and indicates that the first SMF is a primary SMF. Indicating that the first SMF is the primary SMF may be described as indicating the first SMF to send location information of the plurality of UEs to the second SMF. Optionally, the second message further includes the association identifier and/or the identifiers of the plurality of UEs.

S1005: The NEF sends a third message to a second PCF. Correspondingly, the second PCF receives the third message from the NEF. The third message indicates an identifier of a second SMF corresponding to the second PCF. Optionally, the third message further indicates the identifier of the first SMF, and indicates that the second SMF is a secondary SMF and/or indicates that the first SMF is the primary SMF. Indicating that the second SMF is the secondary SMF may alternatively be described as indicating the second SMF to send location information of second UE to the first SMF. In this way, each PCF may determine an identifier of a corresponding SMF.

S1006: The first PCF sends first indication information to the first SMF. Correspondingly, the first SMF receives the first indication information from the first PCF. For content of the first indication information, refer to the foregoing content.

S1007: The second PCF sends third indication information to the second SMF. Correspondingly, the second SMF receives the third indication information from the second PCF. For content of the third indication information, refer to the foregoing content.

S1008: The second SMF sends the location information of the second UE to the first SMF. Correspondingly, the first SMF receives the location information of the second UE from the first SMF. For content of the location information of the second UE, refer to the foregoing content.

S1009: The first SMF sends location information of first UE and the second UE to the second SMF. Correspondingly, the second SMF receives the location information of the first UE and the second UE from the first SMF.

S1010: The first SMF sends the location information of the first UE and the second UE to a first EASDF. Correspondingly, the first EASDF receives the location information of the first UE and the second UE from the first SMF. For content of the location information of the first UE and the second UE, refer to the foregoing descriptions.

Optionally, the second SMF sends the location information of the first UE and the second UE to a second EASDF. Correspondingly, the second EASDF receives the location information of the first UE and the second UE from the second SMF. For content of sending the location information of the first UE and the second UE by the second SMF to the second EASDF, refer to the foregoing descriptions.

S1011: The first UE sends a first request message to the first EASDF. For content of the first request message, refer to the foregoing descriptions.

S1012: The first EASDF determines information about a common EAS. For a manner of determining the common EAS, refer to the foregoing descriptions.

S1013: The first EASDF sends the information about the common EAS to the UDR. Correspondingly, the UDR receives the information about the common EAS from the first EASDF. For content of the information about the common EAS and a manner in which the first EASDF sends the information about the common EAS to the UDR, refer to the foregoing descriptions.

S1014: The UDR may store the information about the common EAS. For content of storing the information about the common EAS, refer to the foregoing descriptions.

S1015: The first EASDF sends the information about the common EAS to the first UE. Correspondingly, the first UE receives the information about the common EAS from the first EASDF.

S1016: The second UE sends a second request message to the second EASDF. Correspondingly, the second EASDF receives the second request message from the second UE. For content of the second request message, refer to the foregoing descriptions.

S1017: The second EASDF obtains the information about the common EAS from the UDR. For content of obtaining the common EAS, refer to the foregoing descriptions.

S1018: The second EASDF sends the information about the common EAS to the second UE. Correspondingly, the second UE receives the information about the common EAS from the second EASDF.

An embodiment of this application provides a method for selecting a primary SMF in a case of a plurality of PCFs. According to the method, when there are a plurality of PCFs in a network, a primary SMF and a secondary SMF may be determined by using the NEF, to ensure that information about a primary/secondary relationship can be synchronized between a plurality of SMFs, so that a common EAS is selected for a plurality of UEs.

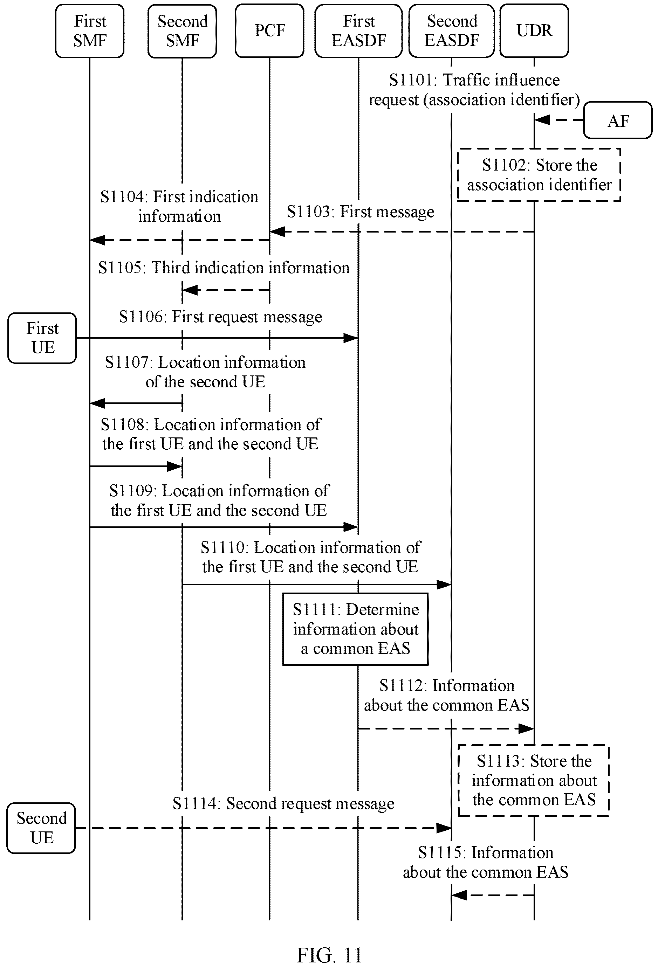

In a possible implementation, a first SMF and a second SMF may collect location information of the plurality of UEs after first UE initiates a first request message. The following describes this implementation with reference to a diagram of a communication method shown in FIG. 11.

S1101: An AF sends a traffic influence request to a UDR. Correspondingly, the UDR receives the traffic influence request from the AF.

For a manner in which the AF sends the traffic influence request to the UDR and content of the traffic influence request, refer to the foregoing descriptions.

S1102: The UDR stores an association identifier.

S1103: The UDR sends a first message to a PCF. Correspondingly, the PCF receives the first message from the UDR. For content of the first message, refer to the foregoing descriptions.

S1101 to S1103 describe a manner in which the PCF determines a plurality of UEs that select a common EAS. If the PCF determines the plurality of UEs in another manner, the steps S1101 to S1103 do not need to be performed, and are represented by using dashed lines in FIG. 11.

S1104: The PCF sends first indication information to a first SMF. Correspondingly, the first SMF receives the first indication information from the PCF. For content of the first indication information and content of sending the first indication information by the PCF to the first SMF, refer to the foregoing descriptions.

S1105: The PCF sends third indication information to a second SMF. Correspondingly, the second SMF receives the third indication information from the PCF.

For content of the third indication information and a manner in which the PCF sends the second indication information to the second SMF, refer to the foregoing descriptions.

S1106: A first UE sends a first request message to a first EASDF. Correspondingly, the first EASDF receives the first request message from the first UE. For content of the first request message and content of sending the first request message by the first UE to the first EASDF, refer to the foregoing descriptions.

S1107: The second SMF sends location information of second UE to the first SMF. Correspondingly, the first SMF receives the location information of the second UE from the second SMF. For the location information of the second UE and a manner in which the second SMF sends the location information of the second UE to the first SMF, refer to the foregoing descriptions.

S1108: The first SMF sends location information of the first UE and the second UE to the second SMF. Correspondingly, the second SMF receives the location information of the first UE and the second UE from the first SMF. For a manner in which the first SMF sends the location information of the first UE and the second UE to the second SMF and content of the location information of the first UE and the second UE, refer to the foregoing descriptions.

S1109: The first SMF sends the location information of the first UE and the second UE to the first EASDF. Correspondingly, the first EASDF receives the location information of the first UE and the second UE from the first SMF. For content of sending the location information of the first UE and the second UE by the first SMF to the first EASDF, refer to the foregoing descriptions.

S1110: The second SMF sends the location information of the first UE and the second UE to a second EASDF. Correspondingly, the second EASDF receives the location information of the first UE and the second UE from the second SMF. For content of sending the location information of the first UE and the second UE by the second SMF to the second EASDF, refer to the foregoing descriptions.

S1111: The first EASDF determines information about the common EAS. For a manner of determining the common EAS, refer to the foregoing descriptions. The first EASDF may send the information about the common EAS to the first UE.

S1112: The first EASDF sends the information about the common EAS to the UDR. Correspondingly, the UDR receives the information about the common EAS from the first EASDF. For content of the information about the common EAS and a manner in which the first EASDF sends the information about the common EAS to the UDR, refer to the foregoing descriptions.

S1113: The UDR may store the information about the common EAS. For content of storing the information about the common EAS, refer to the foregoing descriptions.

S1114: The second UE sends a second request message to the second EASDF. Correspondingly, the second EASDF receives the second request message from the second UE. For content of the second request message, refer to the foregoing descriptions.

S1115: The second EASDF obtains the information about the common EAS from the UDR. For content of obtaining the common EAS, refer to the foregoing descriptions. Optionally, the second EASDF may also send the information about the common EAS to the second UE.

In this embodiment of this application, the first SMF and the second SMF collect the location information of the plurality of UEs after the first UE initiates the first request message. In this way, duration in which the first SMF and the second SMF update and maintain the location information of the first UE and the second UE can be reduced.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. For example, A/B indicates A or B. "At least one of the following items (pieces)" or a similar expression thereof indicates any combination of these items, including a single item (piece) or any combination of a plurality of items (pieces). For example, at least one of a, b, or c indicates a, b, c, a and b, a and c, b and c, or a, b, and c, where a, b, and c may be singular or plural.

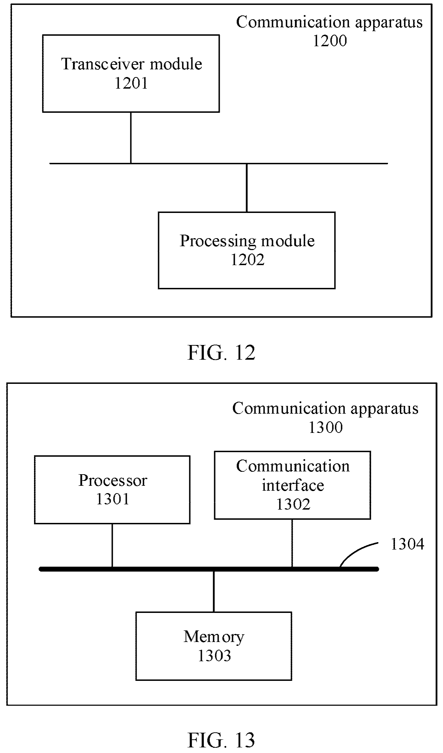

FIG. 12 is a diagram of a structure of a communication apparatus according to an embodiment of this application.

As shown in FIG. 12, the communication apparatus 1200 includes a transceiver module 1201 and a processing module 1202.

In a first embodiment, the communication apparatus 1200 may be configured to implement a function of the SMF (for example, the first SMF or the second MSF) in FIG. 5. Correspondingly, the steps performed by the SMF in FIG. 5 may also be performed. For example, the communication apparatus 1200 is configured to implement a function of the first SMF described above. For example, the transceiver module 1201 may be configured to perform steps S507 and S512, and the processing module 1202 may be configured to perform step S515. Optionally, the transceiver module 1201 may be further configured to perform steps S504 and S516.

For another example, the communication apparatus 1200 may be configured to implement a function of the second SMF in FIG. 5. Correspondingly, the steps performed by the second SMF in FIG. 5 may also be performed. For example, the transceiver module 1201 may be configured to perform steps S509 and S514 under control of the processing module 1202. Optionally, the transceiver module 1201 is further configured to perform step S519 under control of the processing module 1202.

In a second embodiment, the communication apparatus 1200 may be configured to implement a function of the PCF (for example, the first PCF or the second PCF) in FIG. 5. Correspondingly, the steps performed by the PCF (for example, the first PCF or the second PCF) in FIG. 5 may also be performed. The following provides descriptions by using an example in which the communication apparatus 1200 performs a function of the first PCF. For example, the transceiver module 1201 is configured to perform steps S508, S512, and S512 under control of the processing module 1202. Optionally, the transceiver module 1201 may be further configured to perform steps S503 and S517 under control of the processing module 1202.

In a third embodiment, the communication apparatus 1200 may be configured to implement a function of the UDR in FIG. 5. Correspondingly, the steps performed by the UDR in FIG. 5 may also be performed. For example, the transceiver module 1201 is configured to perform steps S508, S510, and S513 under control of the processing module 1202. The transceiver module 1201 is further configured to perform steps S501, S502, and S505 under control of the processing module 1202.

In a fourth embodiment, the communication apparatus 1200 may be configured to perform a function of the first SMF in FIG. 9 or FIG. 11. Correspondingly, the steps performed by the first SMF in FIG. 9 or FIG. 11 may also be performed. For example, the transceiver module 1201 is configured to perform steps S906 to S909 under control of the processing module 1202. Optionally, the transceiver module 1201 is further configured to perform step S904 under control of the processing module 1202. For another example, the transceiver module 1201 is configured to perform steps S1008 to S1010 under control of the processing module 1202. For another example, the transceiver module 1201 is configured to perform steps S1107, S1108, and S1109 under control of the processing module 1202. Optionally, the transceiver module 1201 is further configured to perform steps S1104 and S1105 under control of the processing module 1202.

In a fifth embodiment, the communication apparatus 1200 may be configured to perform a function of the second SMF in FIG. 9 or FIG. 11. Correspondingly, the steps performed by the second SMF in FIG. 9 or FIG. 11 may also be performed. For example, the transceiver module 1201 is configured to perform steps S905 to S909 under control of the processing module 1202. For another example, the transceiver module 1201 is configured to perform steps S1007 to S1009 under control of the processing module 1202. For another example, the transceiver module 1201 is configured to perform steps S1107, S1108, and S1110 under control of the processing module 1202.

In a sixth embodiment, the communication apparatus 1200 may be configured to perform a function of the first EASDF in FIG. 9 or FIG. 11. Correspondingly, the steps performed by the first EASDF in FIG. 9 or FIG. 11 may also be performed. For example, the transceiver module 1201 is configured to perform steps S908 to S911 and S914 under control of the processing module 1202. Optionally, the transceiver module 1201 is further configured to perform step S912 under control of the processing module 1202. For another example, the transceiver module 1201 is configured to perform steps S1010 to S1012 under control of the processing module 1202. For another example, the transceiver module 1201 is configured to perform step S1106 under control of the processing module 1202, and the processing module 1202 may be configured to perform step S1111. Optionally, the transceiver module 1201 may be further configured to perform step S1112.

In a seventh embodiment, the communication apparatus 1200 may be configured to perform functions of the PCF in FIG. 9 to FIG. 11. Correspondingly, the communication apparatus 1200 may also be configured to perform the steps performed by the PCF in FIG. 9 to FIG. 11. For example, the transceiver module 1201 is configured to perform steps S904 and S905 under control of the processing module 1202. For another example, the transceiver module 1201 may be configured to perform steps S1006 and S1007 under control of the processing module 1202. For another example, the transceiver module 1201 may be configured to perform steps S1104 and S1105 under control of the processing module 1202.

In an eighth embodiment, the communication apparatus 1200 may be configured to perform a function of the NEF in FIG. 10A and FIG. 10B. Correspondingly, the communication apparatus 1200 may also be configured to perform the steps performed by the NEF in FIG. 10A and FIG. 10B. For example, the communication apparatus 1200 is configured to perform a function of the NEF in FIG. 10A and FIG. 10B. For example, the transceiver module 1201 is configured to perform functions of S1001, S1002, S1003, S1004, and S1005 under control of the processing module 1202.

For content of the foregoing steps, refer to the foregoing content. Repeated content is not described herein again.

FIG. 13 is a diagram of a structure of a communication apparatus according to an embodiment of this application. As shown in FIG. 13, the communication apparatus 1300 includes a processor 1301 and a communication interface 1302. The processor 1301 and the communication interface 1302 are coupled to each other. It may be understood that the communication interface 1302 may be a transceiver or an input/output interface. The processor 1301 and the communication interface 1302 may implement any one of the foregoing communication methods, for example, the communication method shown in FIG. 5, FIG. 9, FIG. 10A and FIG. 10B, or FIG. 11.

It may be understood that, the processor 1301 may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a transistor logic device, a hardware component, or any combination thereof. The general-purpose processor may be a microprocessor or any regular processor.

Optionally, the communication apparatus 1300 may further include a memory 1303, configured to: store instructions executed by the processor 1301, store input data required for running instructions by the processor 1301, or store data generated after the processor 1301 runs instructions.

The memory 1303 may include a volatile memory (volatile memory), for example, a random access memory (random access memory, RAM). The memory may further include a non-volatile memory (non-volatile memory), for example, a read-only memory (read-only memory, ROM), a flash memory, a hard disk drive (hard disk drive, HDD), or a solid-state drive (solid-state drive, SSD).

Any two of the processor 1301, the communication interface 1302, and the memory 1303 may communicate with each other through a bus 1304. The bus 1304 may be a peripheral component interconnect (peripheral component interconnect, PCI) bus, an extended industry standard architecture (extended industry standard architecture, EISA) bus, or the like. Buses may be classified into an address bus, a data bus, a control bus, and the like.

Optionally, the processor 1301 is configured to implement a function of the processing module 1202, and the communication interface 1302 is configured to implement a function of the transceiver module 1201.

An embodiment of this application provides a communication system. The communication system includes the first SMF, the second SMF, and the UDR that are shown in FIG. 5. Optionally, the communication system further includes the first PCF and the second PCF that are shown in FIG. 5. For functions of the network elements in the communication system, refer to the content described above.

An embodiment of this application provides a communication system. The communication system includes a first SMF, a second SMF, and a first EASDF. The first SMF is, for example, the first SMF shown in any one of FIG. 9 to FIG. 11, and the second SMF is, for example, the second SMF shown in any one of FIG. 9 to FIG. 11. Optionally, the communication system further includes the PCF, the UDR, and the like in FIG. 9 or FIG. 11. Alternatively, the communication system further includes the first PCF, the second PCF, the UDR, and the like in FIG. 10A and FIG. 10B. For functions of the network elements in the communication system, refer to the content described above.

An embodiment of this application provides a chip system. The chip system includes a processor and an interface. The processor is configured to invoke instructions from the interface and run the instructions. When executing the instructions, the processor implements any one of the foregoing communication methods, for example, the communication method shown in FIG. 5, FIG. 9, FIG. 10A and FIG. 10B, or FIG. 11.

An embodiment of this application provides a computer-readable storage medium. The computer-readable storage medium is configured to store a computer program or computer instructions. When the computer program or the computer instructions is/are run, any one of the foregoing communication methods is implemented, for example, the communication method shown in FIG. 5, FIG. 9, FIG. 10A and FIG. 10B, or FIG. 11 is implemented.

An embodiment of this application provides a computer program product including instructions. When the computer program product runs on a computer, any one of the foregoing communication methods is implemented, for example, the communication method shown in FIG. 5, FIG. 9, FIG. 10A and FIG. 10B, or FIG. 11 is implemented.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or a storage medium of any other form well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may alternatively exist as discrete components in a base station or a terminal.

All or some of the foregoing embodiments may be implemented by using software, hardware, firmware, or any combination thereof. When software is used for implementation, all or some of embodiments may be implemented in a form of computer program product. The computer program product includes one or more computer programs or instructions. When the computer programs or the instructions are loaded and executed on a computer, all or some of procedures or functions in embodiments of this application are performed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
sending, to a unified data repository network element, a first data network access identifier corresponding to a first session management network element;
receiving a plurality of data network access identifiers from the unified data repository network element, wherein the plurality of data network access identifiers are determined by the unified data repository network element based on a plurality of data network access identifiers from a plurality of session management network elements, the plurality of session management network elements comprise the first session management network element, and the plurality of data network access identifiers comprise the first data network access identifier; and
determining, from the plurality of data network access identifiers, a common data network access identifier corresponding to the plurality of session management network elements.

2. The method according to claim 1, wherein the method further comprises:
sending the common data network access identifier to the unified data repository network element, wherein the common data network access identifier is used by the unified data repository network element to send the common data network access identifier to a session management network element other than the first session management network element in the plurality of session management network elements.

3. A communication method, comprising:
receiving a first data network access identifier from a first session management network element, wherein the first data network access identifier corresponds to the first session management network element;
sending the first data network access identifier to a unified data repository network element;
receiving a plurality of data network access identifiers from the unified data repository network element, wherein the plurality of data network access identifiers are determined by the unified data repository network element based on a plurality of data network access identifiers from a plurality of session management network elements, the plurality of session management network elements comprise the first session management network element, and the plurality of data network access identifiers comprise the first data network access identifier; and
sending the plurality of data network access identifiers to the first session management network element, wherein the plurality of data network access identifiers are used by the first session management network element to determine a common data network access identifier of the plurality of session management network elements.

4. The method according to claim 3, wherein the method further comprises:
receiving the determined common data network access identifier from the first session management network element; and
sending the common data network access identifier to the unified data repository network element, wherein the common data network access identifier is used by the unified data repository network element to send the common data network access identifier to a session management network element other than the first session management network element in the plurality of session management network elements.

5. A communication method, comprising:
receiving a plurality of data network access identifiers from a plurality of session management network elements, wherein the plurality of session management network elements comprise a first session management network element; and
sending the plurality of data network access identifiers to the first session management network element, wherein the plurality of data network access identifiers comprise a first data network access identifier corresponding to the first session management network element, and the plurality of data network access identifiers are used by the first session management network element to determine a common data network access identifier of the plurality of session management network elements.

6. The method according to claim 5, wherein the method further comprises:
receiving the determined common data network access identifier from the first session management network element; and
sending the common data network access identifier to a session management network element other than the first session management network element in the plurality of session management network elements.

7. The method according to any one of claims 1 to 6, wherein the common data network access identifier is a data network access identifier corresponding to each of the plurality of session management network elements in the plurality of data network access identifiers.

8. The method according to any one of claims 1 to 7, wherein each of the plurality of data network access identifiers is associated with an identifier of a session management network element corresponding to the data network access identifier, and/or an identifier of a terminal device.

9. A communication method, applied to a first session management network element, wherein the method comprises:
obtaining location information of a first terminal device, wherein the first terminal device is a terminal device managed by the first session management network element;
receiving location information of at least one second terminal device from at least one second session management network element, wherein different second session management network elements in the at least one second session management network element manage different terminal devices in the at least one second terminal device; and
sending location information of a plurality of terminal devices to a first edge application server discovery network element, wherein the plurality of terminal devices comprise the first terminal device and the at least one second terminal device, and the location information of the plurality of terminal devices is used by the first edge application server discovery network element to determine a common edge application server of the plurality of terminal devices.

10. The method according to claim 9, wherein the method further comprises:
separately sending the location information of the plurality of terminal devices to the at least one second session management network element; or
separately sending the location information of the first terminal device to the at least one second session management network element.

11. The method according to claim 10, wherein the method further comprises:
receiving first indication information from a network exposure network element or a policy control network element, wherein the first indication information indicates the first session management network element to send the location information of the plurality of terminal devices to the at least one second session management network element.

12. The method according to any one of claims 9 to 11, wherein the method further comprises:
separately sending second indication information to the at least one second session management network element, wherein the second indication information indicates that the first session management network element subscribes to the location information of the second terminal device managed by the at least one second session management network element.

13. A communication method, applied to a second session management network element, wherein the method comprises:
sending, to a first session management network element, location information of at least one second terminal device managed by the second session management network element;
receiving location information of a plurality of terminal devices from the first session management network element, wherein the plurality of terminal devices comprise the at least one second terminal device and a first terminal device managed by the first session management network element, and the location information of the plurality of terminal devices is used to determine a common edge application server of the plurality of terminal devices; and
sending the location information of the plurality of terminal devices to a second edge application server discovery network element.

14. The method according to claim 13, wherein the method further comprises:
receiving third indication information from a network exposure network element or a policy control network element, wherein the third indication information indicates the second session management network element to send, to the first session management network element, the location information of the at least one second terminal device managed by the second session management network element.

15. The method according to claim 13 or 14, wherein the method further comprises:
receiving second indication information from the first session management network element, wherein the second indication information indicates that the first session management network element subscribes to the location information of the second terminal device managed by the at least one second session management network element.

16. A communication method, comprising:
receiving location information of a plurality of terminal devices from a first session management network element, and receiving a first request message from a first terminal device, wherein the first request message is used to request to discover an edge application server, and the first terminal device belongs to the plurality of terminal devices;
determining information about a common edge application server of the plurality of terminal devices based on the location information of the plurality of terminal devices; and
sending the information about the common edge application server to the first terminal device.

17. The method according to claim 16, wherein the method further comprises:
sending the information about the common edge application server to a unified data repository network element.

18. The method according to claim 16 or 17, wherein before the determining the information about the common edge application server of the plurality of terminal devices based on the location information of the plurality of terminal devices, the method further comprises:
determining that the information about the common edge application server of the plurality of terminal devices does not exist in the unified data repository network element.

19. The method according to any one of claims 16 to 18, wherein the determining the information about the common edge application server of the plurality of terminal devices based on the location information of the plurality of terminal devices comprises:
sending a second request message to a domain name server, wherein the second request message is used to request to separately determine an edge application server for the plurality of terminal devices, and the second request message further comprises the location information of the plurality of terminal devices; and
receiving a response message from the domain name server, wherein the response message carries information about a plurality of edge application servers, and the common edge application server is one of the plurality of edge application servers.

20. A communication apparatus, comprising:
a module configured to perform the method according to any one of claims 1 and 2 and claims 7 and 8; or
a module configured to perform the method according to any one of claims 3 and 4 and claims 7 and 8; or
a module configured to perform the method according to any one of claims 5 to 8; or
a module configured to perform the method according to any one of claims 9 to 12; or
a module configured to perform the method according to any one of claims 13 to 15; or
a module configured to perform the method according to any one of claims 16 to 19.

21. A communication system, comprising:
an apparatus configured to perform the method according to any one of claims 1 and 2 and claims 7 and 8, an apparatus configured to perform the method according to any one of claims 3 and 4 and claims 7 and 8, and an apparatus configured to perform the method according to any one of claims 5 to 8; or
an apparatus configured to perform the method according to any one of claims 9 to 12, an apparatus configured to perform the method according to any one of claims 13 to 15, and a module configured to perform the method according to any one of claims 16 to 19.

22. A communication apparatus, comprising: a processor and a communication interface, wherein the communication interface is configured to: receive a signal from an apparatus other than the communication apparatus and transmit the signal to the processor, or send a signal from the processor to an apparatus other than the communication apparatus, the processor executes code instructions through a logic circuit to implement the method according to any one of claims 1 and 2 and claims 7 and 8, or implement the method according to any one of claims 3 and 4 and claims 7 and 8, or implement the method according to any one of claims 5 to 8, or implement the method according to any one of claims 9 to 12, or implement the method according to any one of claims 13 to 15, or implement the method according to any one of claims 16 to 19.

23. A computer program product comprising instructions, wherein when the instructions are run by a computing device cluster, the computing device cluster is enabled to perform the method according to any one of claims 1 and 2 and claims 7 and 8, or perform the method according to any one of claims 3 and 4 and claims 7 and 8, or perform the method according to any one of claims 5 to 8, or perform the method according to any one of claims 9 to 12, or perform the method according to any one of claims 13 to 15, or perform the method according to any one of claims 16 to 19.

24. A computer-readable storage medium, wherein the storage medium stores a computer program or instructions, and when the computer program or the instructions are executed by a communication apparatus, the method according to any one of claims 1 and 2 and claims 7 and 8, or the method according to any one of claims 3 and 4 and claims 7 and 8, or the method according to any one of claims 5 to 8, or the method according to any one of claims 9 to 12, or the method according to any one of claims 13 to 15, or the method according to any one of claims 16 to 19 is implemented.
